(19) Europäisches Patentamt

European Patent Office

Office européen des brevets

(11) Publication number: **0 259 748 B1**

# EUROPEAN PATENT SPECIFICATION

(12)

(45) Date of publication of patent specification: **26.06.91**

(51) Int. Cl.5: **C23F 11/18, C09D 5/08**

(21) Application number: **87112697.5**

(22) Date of filing: **31.08.87**

The file contains technical information submitted after the application was filed and not included in this specification

(54) **Corrosion preventing pigment and composition.**

(30) Priority: 29.08.86 JP 204794/86
18.02.87 JP 36189/87
18.02.87 JP 36190/87
18.02.87 JP 36191/87
18.02.87 JP 36192/87

(43) Date of publication of application:
**16.03.88 Bulletin 88/11**

(45) Publication of the grant of the patent:
**26.06.91 Bulletin 91/26**

(84) Designated Contracting States:
**DE FR GB IT**

(56) References cited:
EP-A- 0 168 215        DE-A- 3 438 506
DE-C- 880 528         FR-A- 2 438 074
US-A- 1 947 122       US-A- 3 365 313
US-A- 4 017 315       US-A- 4 210 575

(73) Proprietor: **Nippon Paint Co., Ltd.**
**2-1-2, Oyodokita Oyodo-ku**
**Osaka-shi Osaka-fu(JP)**

(72) Inventor: **Okai, Toshihiro**
**7-22-7, Myokenzaka**
**Katano-shi Osaka-fu(JP)**

Inventor: **Okumura, Yoshiaki**
**83, Hirakawanohara**
**Joyo-shi Kyoto-fu(JP)**
Inventor: **Oda, Mitsuyuki**
**40, Minamiochiaicho Kisshoin Minami-ku**
**Kyoto-shi Kyoto-fu(JP)**
Inventor: **Yamamoto, Takashi**
**2, Omegane Kamikoma Yamashiro-cho**
**Souraku-gun Kyoto-fu(JP)**
Inventor: **Jinnouti, Masahiro**
**24-8-13, Higashikorimotomachi**
**Hirakata-shi Osaka-fu(JP)**
Inventor: **Fukuda, Hideo**
**3-447, Ikejiri**
**Itami-shi Hyogo-ken(JP)**
Inventor: **Kuwajima, Teruaki**
**6-9-1-403, Hishiyanishi**
**Higashiosaka-shi Osaka-fu(JP)**

(74) Representative: **Hansen, Bernd, Dr.rer.nat. et al**
**Hoffmann, Eitle & Partner Patentanwälte Arabellastrasse 4 Postfach 81 04 20**
**W-8000 München 81(DE)**

EP 0 259 748 B1

**Description**

CORROSION PREVENTING PIGMENT AND COMPOSITION

Field of the Invention

The present invention relates to corrosion preventive pigments and compositions.

Background of the Invention

Generally, a metal corrodes in the presence of water, oxygen, and electrolyte. The widely believed cause of corrosion is that a local cell on a metal substrate promotes an electrochemical reaction.

In order to prevent the corrosion, it is proposed to allow the metal particles to contact with a chromate ion. The chromate ion has two functions. One is an oxidizer function whereby the chromate ion ($CrO_4^{2-}$) is reacted with a metal atom, such as Fe to form stable gamma-$Fe_2O_3$, and the other is a deposition function whereby the chromate ion is reduced to form a chromium oxide, for example $Cr_2O_3$ which is deposited on a metal surface. According to these two functions, a physical barrier film is formed on the metal surface to develop excellent corrosion preventive properties.

However, the chromium (VI) having high corrosion preventive properties is toxic to human body and therefore very limited in use by several regulations in Japan.

Accordingly, many efforts have been paid to develop a corrosion preventive agent which is not or little toxic to human body. For example, phosphate materials, especially zinc phosphate, silico phosphate, aluminum condensed phosphate and the like are now studied and some of them are commercially available. The phosphate materials, however, have only the deposition function whereby the phosphate materials are reacted with metal to produce a material protecting the metal substrate, and have not the oxidizer function. The phosphate materials have low corrosion preventive properties in comparison with the above mentioned chromate ions.

"FR-A-2438074 discloses a greenish yellow pigment having a dominant wavelength in the range from 573-575 nm comprising the calcination product of $BiPO_4$, $V_2O_5$ and an alkaline earth metal oxide."

Summary of the Invention

It has been found that remarkably high corrosion preventive properties can be obtained by a combination of the above mentioned phosphate ions and soluble ions of vanadium. In the practice of the above inventive concept, the present inventor provides the following two aspects.

Accordingly, the present invention provides a corrosion preventative pigment consisting essentially of

(a) a phosphorus compound which generates phosphate ions in the presence of water and oxygen, selected from the group consisting of phosphorous pentoxide, ortho-phosphoric acid, a condensed phosphoric acid, an alkaline earth metal or transition metal phosphate, and an alkaline earth metal or transition metal condensed phosphate, and

(b) a vanadium compound which generates vanadate ions in the presence of water and oxygen, selected from the group consisting of vanadium (V) oxide, a vanadyl compound, an alkaline earth metal or transition metal vanadate, a baked condensate of alkaline earth metal or transition metal vanadates, and a heterocondensate of alkaline earth metal or transition metal vanadate;

and which has a weight ratio of (a)/(b) of 0.3 to 100 in terms of $P_2O_5/V_2O_5$ and has a pH value of from 5 to 9.

Additionally, the present invention provides a corrosion preventative coating composition comprising a corrosion preventive pigment as described above in a combination with a film-forming resin.

Detailed Description of the Invention

The two aspects are illustrated in the above order.

(Process for preventing corrosion)

The soluble ions of vanadium supplement the oxidizer function which lacks in the phosphate ions. The vanadium ions form redox couples under the corrosive conditions containing water and oxygen, thereby a redox couple indicates a noble redox potential and then fulfill the oxidizer function. On the other hand, as mentioned previously, the phosphate ions form, under the corrosive conditions, a deposited film (probably $FePO_4$), thus providing the deposition function. Accordingly, these two species of ions are indispensable in embodying the present invention, and the effect of the invention is not attained when even one of these two species is absent.

The soluble ions of vanadium used in the present invention are monomeric ions or polymeric ions having a trivalent, tetravalent and pentavalent vanadium element, including $V^{3+}$, $VOH^{2+}$, $VO^{+}$, $VO^{2+}$, $HV_2O_5{}^{-}$, $VO_2{}^{+}$, $H_3V_2O_7{}^{-}$, $H_2VO_4{}^{-}$, $HVO_4{}^{2-}$, $VO_4{}^{3-}$, $VO_3{}^{-}$, $HV_2O_7{}^{3-}$, $V_2O_7{}^{4-}$, $V_3O_9{}^{3-}$, $V_4O_{12}{}^{4-}$, $H_2V_{10}O_{28}{}^{4-}$, $HV_{10}O_{28}{}^{5-}$, $V_{10}O_{28}{}^{6-}$ and the like. In essence, these ions of vanadium are categorized into vanadium ions, vanadyl ions, orthovanadate ions and condensed vanadate ions. Vanadate ions and condensed vanadate ions are preferable. These two ionic species usually exist in an aqueous solution as a mixture, as known to the art. When a pH is around neutral (within a range of 5 to 9), the condensed vanadate ions prevail in the solution and a trace amount of orthovanadate ions are present, because the orthovanadate ions are condensed with each other in an aqueous solution. Typical examples of the condensed vanadate ions are pyrovanadate ions, metavanadate ions, trivanadate ions, tetravanadate ions, hexavanadate ions, decavanadate ions and the like.

Examples of the phosphate ions are orthophosphate ions, pyrophosphate ions, tripolyphosphate ions, higher condensed phosphate ions, trimetaphosphate ions, tetrametaphosphate ions or higher condensed metaphosphate ions. The phosphate ions are present in an aqueous solution in various forms due to condensation degree and pH. Generally, the phosphate ions are condensates in an aqueous solution.

To supply such soluble ions of vanadium and phosphate ions, an ion carrier such as an ion-exchange resin or inorganic ion exchange material (for example, hydrotalcite) may be allowed to absorb these ions. A corrosion preventive agent, which is prepared by mixing a phosphate ion source and a source of soluble ion of vanadium, or by baking or melting the phosphate ion source and source of soluble ions of vanadium, may be added in an aqueous solution to get off the phosphate ions and the soluble ions of vanadium. Such a corrosion preventive agent, especially a corrosion preventive pigment, are disclosed in Japanese Patent Application Ser. Nos. 36191/1987, 36192/1987, 36189/1987 and 16190/1987.

The compound and carrier containing the both ions may be formulated into a corrosion preventive wax, a paint, a lining, and allowed to contact with a metal material. Additionally, an aqueous solution containing the both ions may be sprayed onto the surface of a metal material so as to temporarily obtain corrosion preventive properties. If the presence of the both ions adversely affects on the stability of a system containing the both ions, such as aqueous composition and the like, the compound and carrier containing the both ions may be coated with another material, such as a resin film and the like prior to its application.

Examples of the metal materials are steel, high strength steel, high tensile steel, plated steel, an iron alloy such as stainless steel, aluminum and an alloy thereof.

The corrosive condition in which the effect of the present invention is best demonstrated are those involving at least water or oxygen, and the conditions may allow the presence of other ions, such as chloride ions. The present invention most effectively prevents corrosion in a pH range of 5 to 9. The pH values outside this range will deteriorate corrosion preventive properties.

The pigments of the present invention can provide excellent corrosion preventive properties equal or superior to that of chromate ions. The present invention provides pigments for preventing corrosion having no enviromental pollution. The corrosion to be inhibited by the present invention includes weight loss of corrosion, corrosion cracking, hydrogen emblittlement, filiform corrosion, edge creep, fabrication portion (bend portion) corrosion.

(Corrosion preventive pigment)

The pigment of the present invention can be prepared by two methods in which one is a mixing method and the other is a calcining method. First of all, the calcining method will be explained hereinafter.

The phosphorus compound (a) includes phosphoric acid; condensed phosphoric acid; a phosphate or condensed phosphate of metals, phosphorus pentoxide; a phosphate mineral; a composit phosphate pigment; and a mixture thereof. Orthophosphoric acid (orthophosphate) herein includes monohydrogen derivatives ($HPO_4{}^{2-}$) and dihydrogen derivatives ($H_2PO_4{}^{-}$). The condensed phosphate also includes such hydrogen derivatives thereof. The condensed phosphate further includes metaphosphoric acid (metaphosphate), polyphosphoric acid (polyphosphate) and polymetaphosphoric acid (polymetaphophate). Examples of the phosphorus compounds are a phosphate mineral, such as monetite, whitlockite, zenotime, stercorite, struvite, vivianit and the like; a conventional composit phosphate pigment, such as polysilicophosphate and the like; a condensed phosphoric acid, such as pyrophosphoric acid, metaphosphoric acid; a condensed phosphate, such as metaphosphate, tetrametaphosphate, hexametaphosphate, pyrophosphate, acidic pyrophosphate, tripolyphosphate and the like; and a mixture thereof. Metals forming a phosphate are not limited, for example, an alkali metal; an alkaline earth metal such as magnesium and calcium; a typical element such as aluminum, tin and the like; a transition element such as manganese, cobalt, iron, nickel; and the like. Preferred metals are alkaline earth metals. When the phosphate of an alkali metal is employed, the obtained product is liable to become water-dissoluble. This adversely affects on coating properties when formulated into a coating composition. However, if it is possible to control solubility during preparing or in another step of the preparation, the alkali metal phosphate can be used. The control can be carried out by using a matrix material for preventing dissolubility or by coating. When the matrix is a glass material, it imparts excellent corrosion preventive properties.

In addition to the above mentioned phosphoric acid and phosphates, a sludge formed from a zinc phosphate treatment of an iron substrate, which mainly contains zinc iron phosphate, can be used for the present invention, if contaminants such as crude particles, electrolyte including a chloride ion are removed from it by means of sieving or rinsing and the like.

The vanadium compound (b) of the present invention is a compound of which vanadium valency is one or more of 0, 2, 3, 4 and 5. The vanadium compound can be oxides, hydroxides, oxyacid salts, halides, sulfate, metal powder and the like. These compound of which valency is 0, 2, 3 and 4 is decomposed by heating and reacted with oxygen in the air to have higher valency. For example, vanadium powder and the compound having a valency of 2 is finally changed to a compound having a valency of 3, 4 or 5. The vanadium compound having a valency of 5 is prefered. The vanadium powder which has a valency of 0 can be employed in the present invention because of the oxidation function as mentioned above. The vanadium compound having a valency of 5 generates a vanadate ion so that it is easy to form a heteropolymer by reacting with a phosphate ion. Examples of the vanadium compounds (b) are a vanadium (II) compound, such as vanadium (II) oxide and vanadium (II) hydroxide; a vanadium (III) compound, such as vanadium (III) oxide ($V_2O_3$); a vanadium (IV) compound, such as vanadium (IV) oxide ($V_2O_4$), vanadyl halide ($VOX_2$) and the like; a vanadium (V) compound, such as vanadium (V) oxide ($V_2O_5$); a vanadate such as orthovanadate of metal, metavanadate, pyrovanadate, vanadyl halide ($VOX_3$) and the like; and a mixture thereof. Metal for vanadates can be the same as listed in the phosphates. The vanadium compound (b) may be prepared by heating vanadium oxide with oxides, hydroxides, carbonates, etc of another metal at more than 600 $^\circ$C. As mentioned in the phosphate compound, alkali metal is not always good for the present invention because of solubility. However, the alkali metal can be used if the control of solubility is made. In this case, a matrix material, especially a glass material, is preferred.

The network modifier of the present invention is a metal ion source which is added for modifying a network structure of the melted product of the phosphorus compound and the vanadium compound. Examples of the metal ions for the network modifiers are alkali metal ions, alkaline earth metal ions, typical metal ions and transition metal ions. Preferred are those listed in the phosphate compound. The network modifier (c) is generally provided in the form of oxides, hydroxides, carbonates, nitrates, organic acid salts, silicates, borates, sulfates, chlorides and the like. Preferred are oxides, hydroxides and carbonates. If alkali metal is adopted, or if sulfates or chlorides are adopted, these compounds adversely affects on coating properties because of high water-solubility. In such a case, the matrix material including a glassy material or coating of particles effectively prevents water-solubility.

In the network modifier, manganese oxide ($MnOx$: $1.5 < x \leq 2.0$) has a special function. Manganese oxide has oxidating effect so as to prevent a reduce of oxidation number of vanadium.

The glassy material (d) of the present invention includes not only matrix-forming glass such as silicate glass and borate glass, but also glass containing a metal element, such as a metal element of the network modifier, in matrix-forming glass. Examples of the glassy materials are silica glass; silicate glass, such as sodalime-silicate glass ($Na_2O$-$CaO$-$SiO_2$ type), lead-silicate glass ($Na_2O$-$PbO$-$SiO_2$ type), aluminosilicate glass ($Al_2O_3$-$CaO$-$SiO_2$ type), borosilicate glass ($Na_2O$-$B_2O_3$-$SiO_2$ type); lead-borosilicate glass ($PbO$-$B_2O_3$ type, so called solder glass); aluminoborophosphate glass ($BaO$-$Al_2O_3$-$B_2O_3$ type); aluminophosphate glass ($P_2O_5$-$Al_2O_3$-$ZnO$ type); and the like. Preferred is sodalime glass (C glass), such as glass flake (CCF-150; commercially available from Nippon Glass Fiber Co. Ltd.); aluminosilicate glass (E glass), such as glass flake (CEF-150; commercially available from Nippon Glass Fiber Co. Ltd.); and borosilicate glass, such as pyrex avilable from Corning Glass Works Co. Ltd.). An electric conductivity of the glassy material is preferably not more than 500 $\mu$S/cm when one gram of glassy material particles is dipersed or suspended in 100 ml of water. Amounts more than 500 $\mu$S/cm deteriorate corrosion resistance.

The pigment of the present invention is prepared by calcining a mixture of the phosphorus compound (a), the vanadium compound (b), optionally the network modifier (c) and the glassy material (d), and cooling and grinding. The other inorganic materials, such as a matrix excepting the glassy material can be formulated in the mixture. Calcining is carried out at a temperature of more than a melting point ($T_1$) of the

molten product of the mixture, preferably more than 600 °C, more preferably more than 1,000 °C, most preferably more than a higher melting point of either $T_1$ or the glassy material. Temperatures less than that of mentioned above become insufficient for reaction. The amounts of the phosphorus compound (a) and the vanadium compound (b) is within the range of 0.3 to 100, preferably 1 to 10 in terms of a molar ratio of $P_2O_5/V_2O_5$. The amount of the network modifier (c) is not more than three times, preferably 0 to 2.0 times of a total molar number of $V_2O_5$ and $P_2O_5$ in case where all cations are expressed in the form of MO, $M_2O_3$, $M_3O_4$, $MO_2$ or $M_2O$ according to their oxidation numbers. The form of the oxide is $M_2O$ when an oxidation number is one, MO when an oxidation number is 2, $M_2O_3$ when an oxidation number is 3, $M_3O_4$ when an oxidation number is 2 and 3 (for example, Mn is liable to have an oxidation number of both 2 and 3 when melted) and $MO_2$ when an oxidation number is 4. In case where manganese oxides are added to the mixture in order to avoid reducing an oxidation number of a vanadium element, the manganese oxides are used in an amount of not less than 0.1 mole based on one mole of $V_2O_5$. Amounts less than 0.1 mole are not sufficient to avoid reducing the oxidation number number of the vanadium element. When the manganese oxide is employed, a temperature is set within the range of 700 to 1400 °C. Temperatures less than 700 °C do not occur oxygen from the manganese oxides, and temperatures more than 1400 °C can not avoid reducing the oxidation number of vanadium. The glassy material (d) is present in an amount of 5 to 500 times, preferably 10 to 100 times of a total amount of the phosphorus compound (a), the vanadium compound (b) and the network modifier (c). Amounts outside of the above mentioned range do not provide sufficient corrosion resistance. The term "corrosion" herein means not only normal rust, but also blister of coatings. A period for heating is generally 0.2 to 10 hours, but more than 10 hours has substantially no effect on physical properties of the corrosion preventive pigment of the present invention. The components to be heated or calcined are preferably particles having a particle size of not more than 100 $\mu$m, because heating or calcining can be easily carried out. Accordingly, the components are ground prior to mixing, or can be mixed and then ground. Grinding can be carried out by wetting the components with water or another solvent or in a slurry condition.

The calcined product (hereinafter may call "melt") is cooled and ground and classified into not more than 10 $\mu$m, preferably not more than 2 $\mu$m by a method known to the art. Cooling can be carried out slowly or rapidly if the melt is divided into a plural phase.

In case where a pigment having light color is required for some purpose, the components (a-d) having light color are selected or they are selected such that the obtained pigment has light color. For example, when the phosphorus compound has the following formula;

$$yM_2O.P_2O_5 \text{ or } y\ MO.P_2O_5$$

wherein $1 \leqq y \leqq 3$, M represents a metal element, preferably calcium or magnesium, and when the vanadium compound has the following formula;

$$xM_2O.V_2O_5 \text{ or } xMO.V_2O_5$$

wherein $1/2 \leqq x \leqq 3$, preferably $1 \leqq x \leqq 2$, a pigment having light color is obtainable if P/V is adopted to 5 to 30.

Although the corrosion preventive pigment can be obtained by calcining, the pigment may also be obtained by mixing optionally in the presence of pressure. Preferred example of the phosphorus compounds (a), which are included in the above mentioned phosphorus compound (a), are an orthophosphate, a condensed phosphate, a heterocondensate of phosphoric acid such as phosphomolybdate and the like. The phosphorus compound (a) preferably has a pH of 5 to 9 and an electric conductivity ($x$) of 30 $\mu$S/cm to 3 mS/cm, more preferably 100 $\mu$S/cm to 2 mS/cm in an aqueous solution. The electric conductivity is determined using a conventional conductometer by dispersing or suspending the phosphorus compound (a) of one gram in 100 ml of water. The phosphorus compound (a) has high corrosion preventive properties in this pH and conductivity range. The compound (a) outside of this range can be employed by a suitable treatment. Another example of such a compound (a) is sludge in phosphating conversion coating, such as sludge in zinc phosphate coating and the like. This sludge is a precipitate of phosphates produced in a chemical treatment of iron, steel, zinc plated steel with a known zinc phosphate treating agent.

Preferred vanadium compounds (b) for the mixing method are vanadyl compounds, vanadates, condensates of vanadates, heterocondensates of vanadates and the like. The vanadate ions in an aqueous solution can be changed to various forms due to a pH of the aqueous solution and the like. The vanadate ions mainly are condensed vanadate ions or hydrogen-containing ions thereof. The vanadate ions herein is understood to include such condensates. The vanadium compound (b) has preferably a pH of 5 to 9 and an electric conductivity of 30 $\mu$S/cm to 2 mS/cm. In this range, it has excellent corrosion preventive properties. The other vanadium compound (b) outside of said range can be used by preliminary treating to be in said range.

In this embodiment, the pigment of the present invention is obtained by mixing the phosphorus compound (a) with the vanadium compound (b). Amounts of both components are not limited. Generally, a compound having a high solubility is formulated in a small amount, while a compound having a small solubility is formulated in a large amount. An excellent corrosion preventive properties are provided when a concentration of phosphate ions is higher than that of vanadate ions. Accordingly, if an electric conductivity of the phosphorus compound is kp, an amount of it is Cp, an electric conductivity of the vanadium compound is $x$v, and an amount of it is Cv, preferred combination is $x$p > $x$v or Cp > Cv. More preferred combination is $x$p > $x$v and Cp > Cv. Most preferred combinations, when magnesium hydrogenphosphate and n(metal oxide).($V_2O_5$) is employed, are $nMgO.V_2O_5$ or $nCaO.V_2O_5$ (1.8<n<2.2), $ZnO.V_2O_5$ (1<n<3.5), $nCoO.V_2O_5$ or $nCo_3O_4.V_2O_5$ (1<n<3.5); when calcium hydrogenphosphate is employed, $nCaO.V_2O_5$ - (2≦n<2.2), $nMn_3O_4.V_2O_5$, $nMn_2O_3.V_2O_5$ or $nMnO.V_2O_5$ (1<n<3.5).

In another embodiment of the mixing method, a corrosion preventive pigment is prepared by mixing in the presence of pressure the phosphorus compound (a), the vanadium compound (b) and the network modifier (c). The obtained pigment is different from a mixture without treating at a high temperature. In this embodiment, preferred phosphorus compound (a) is calcium monohydrogen phosphate, calcium phosphate, magnesium monohydrogen phosphate or magnesium phosphate. Preferred vanadium compound (b) is vanadium oxide (V). Also, a suitable network modifier (c) is calcium oxide, calcium hydroxide, magnesium oxide or magnesium hydroxide. The pressure herein is impact force, shearing force and the like. The pressure is imparted by a hummer mill, a mortar or a grind type mill. This type of reaction under pressure is called a mechanochemical reaction. The mechanochemical product can be further heated at a temperature of 100 to 300 $^\circ$C, preferably 150 to 250 $^\circ$C.

The corrosion preventive pigment of the present invention has a particle size of not more than 10 $\mu$m, preferably not more than 2 $\mu$m.

The pigment of the present invention may be treated to enhance dispersing stability, if necessary. In the dispersing stability treatment, a dispersant may be absorbed on a surface of the pigment.

The pigment of the present invention can be formulated into a corrosion preventive wax, a paint, a lining and the like.

The paint can be any type known in the art. The paint may contain an extender, a color pigment, a vehicle, a solvent and another additive. Any type of vehicle can be used for the paint and the solvent is one which dissolves a vehicle resin. Examples of the vehicles are epoxy resins, tar modified epoxy resins, urethane modified epoxy resins, melamine resins, melamine alkyd resins, alkyd resins, oil modified alkyd resins, phenol resins, epoxy modified phenol resins, chlorinated resins, polyester resins, silicone resins, acryl resins, polyurethane resins, petroleum resins, polyethylene, polypropylene, fluorinated resins, oils and the like. Examples of solvents are hydrocarbons, ketones, esters, alcohols, water and the like. Examples of the additives for paints are a plasticizer, a surfactant, a drier, a crosslinking agent, a dispersant, a thickner, an anti-sagging agent.

The paint can be coated by a conventional method to dry or cure. The cured coating has preferably an oxygen permeability coefficient (P) of $1 \times 10^{-16}$ to $1 \times 10^{-7}$ (ml(STP).cm/cm$^2$.s.cmHg), within which the coating has excellent corrosion resistance.

The pigment of the present invention is present in the paint in an amount of 0.1 to 50 parts by weight based on the solid contents of 100 parts by weight.

The metal substrate for the pigment of the present invention includes steel, high strength steel, high tensile steel, plated steel, stainless steel, iron, aluminum and the like.

The pigment of the present invention effectively prevents or inhibits corrosion occurred in a condition wherein water and oxygen are present, or a condition accerelating occuring blister. Such a corrosive condition may contain ions which is believed to accelerate corrosion, such as chloride ions. The blister can occur in a various condition, especially a temperature gradient condition wherein a temperature of the coatings in one side is different from that of the coatings in other side, or an electric-corrosion preventive condition wherein the oxidation of steel is electrically reduced to prevent corrosion. The pigment of the present invention effectively inhibits a decline of coatings. The pigment of the present invention effectively functions within a pH range of 2 to 9. It is noted that the pigment of the present invention prevents blister at a pH of 2 to 5 and prevents general corrosion at a pH of 5 to 9.

The pigment of the present invention has corrosion preventive properties equal or superior to chromate ions. The present invention provides a corrosion preventive pigment having no environmental pollution. The corrosion to be inhibited by the pigment of the present invention includes weight loss of corrosion, corrosion cracking, hydrogen embrittlement, filiform corrosion, pitting corrosion, edge creep, fabrication portion (bend portion) corrosion.

(Corrosion preventive coating composition)

According to the inventive concept of the present invention, it is required for the corrosion preventive coating composition of the present invention to generate both phosphate ions and vanadate ions when contacted with a condition containing water and oxygen. It, however, is not necessary that these ions were contained in the coating composition as component ions. Accordingly, if these ions are possible to be present in the ion form, the coating composition may positively contain these ions. If such ions are impossible to be present in the coating composition in the ion form, the coating composition contains a compound producing these ions when contacted with water and oxygen. The vanadate ion source and vanadate ion source are mainly introduced from a corrosion preventive pigment of the present invention.

The film-forming resin to be formulated in the corrosion preventive coating composition can be anyone known to the art. Examples of the film-forming resins are maleic acid modified oils, epoxy resins, modified epoxy resins, alkyd resins, acryl resins, melamine resins, urea resins, blocked isocyanate resins, maleic acid modified polybutadiene resins, polyvinyl butylal, polyvinylalcohol, silicate esters, silicone resins, silicates, chrolinated rubber and the like.

The corrosion preventive coating composition can be used in any forms. It, therefore, can be in the form of an aqueous coating composition, a solvent based coating composition, a powder coating composition, an electrocoating composition, a spray coating composition, a clear coating composition and the like. The corrosion preventive coating composition may also be in the form of an aqueous coating composition containing aluminum pigment and a zinc rich coating composition. The corrosion preventive properties of the present coating composition is effective not only on a substrate to be coated, but also on metal particles, such as a metallic pigment. Accordingly, the corrosion of the metallic pigment, especially aluminum pigment, is effectively prevented to impart enhanced brightness. In case of the zinc rich coating composition, the phosphate ions and vanadate ions are believed to react with zinc particles and a substrate to improve adhesive properties between the top coating and the zinc rich coating. Although it has some possibility to form white rust on the surface of the coating of the zinc rich coating composition, the coating composition of the present invention properly inhibits the activity of the zinc particle to improve white rust. It is also found that the coating composition of the present invention improves throwing-power if it is used for electrocoating.

The coating composition may contain an extender, a color pigment, a vehicle, a solvent and another additive. Examples of the additives for paints are a plasticizer, a surfactant, a drier, a crosslinking agent, a dispersant, a thickner and an anti-sagging agent. The total amount of the phosphate ion source and vanadate ion source is within the range of 0.1 to 50 parts by weight, preferably 0.5 to 20 parts by weight based on the solid content of the coating composition.

The metal substrate for the pigment of the present invention includes steel, high tensile strength steel, plated steel, stainless steel, iron, aluminum and the like.

The pigment of the present invention effectively prevents or inhibits corrosion occurred in a condition wherein water and oxygen are present, or a condition accelerating occurring blister. Such a corrosive condition may contain ions which is believed to accelerate corrosion, such as chloride ions. The blister can occur in a various condition, especially a temperature gradient condition wherein a temperature of the coatings in one side is different from that of the coatings in other side, or an electric-corrosion preventive condition wherein the oxidation of steel is electrically reduced to prevent corrosion. The coating composition of the present invention effectively inhibits a decline of coatings. The coating composition of the present invention effectively functions within a pH range of 2 to 9. It is noted that the pigment of the present invention prevents blister at a pH of 2 to 5 and prevents general corrosion at a pH of 5 to 9.

The coating composition of the present invention has corrosion preventive properties equal or superior to chromate ions. The present invention provides a corrosion preventive coating composition having no environmental pollution. The corrosion to be inhibited by the coating composition of the present invention includes weight loss of corrosion, corrosion cracking, hydrogen embrittlement, filiform corrosion, pitting corrosion, edge creep, fabrication portion (bend portion) corrosion.

Examples

The present invention is illustrated by the following example.

(Examples of the process for preventing corrosion)

Brief Explanation of the Drawings

Figs. 1 and 2 are charts independently illustrating the effect derived from the coexisting two ionic species in accordance with Example 1 and Comparative Example 1.

Fig. 3 shows the correlation between the corrosion potential and the corrosion rate in accordance with Example II and Comparative Example II.

Fig.4 is a chart showing polarization curves.

Fig.5 is a chart graphically showing corrosion weight losses of cold-rolled steel plate.

Fig.6 schematically shows a measuring equipment used in Example V and Comparative Example V.

Fig.7 shows the results of measurement.

Example I and Comparative Example I

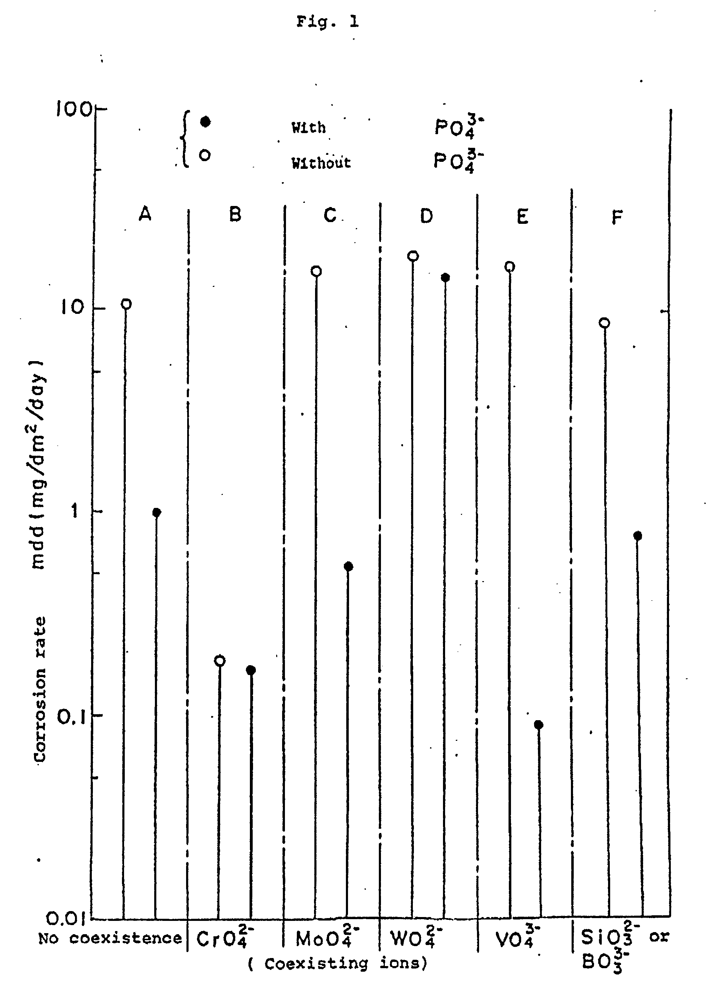

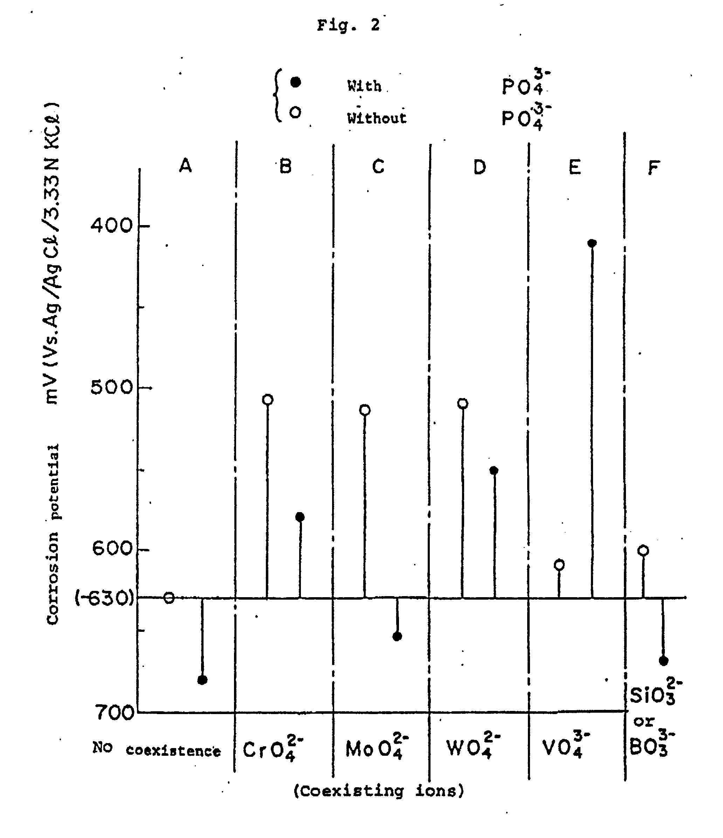

The example shows the difference in effect depending on an addition of orthophosphate ions($PO_4^{3-}$). Into a 3 % NaCl aqueous solution (the system left open to air) with pH = 7, various ions for example, $CrO_4^{2-}$, $VO_4^{3-}$ and the like were added (0.05M). Then, cold-rolled steel panels (JIS G 3141 SPCC SD) were immersed in the above two types of solutions. One type of solutions is added with phosphate ions ($PO_4^{3-}$), and the other type of solutions is added without phosphate ions. The values of corrosion rate were determined by the gravimetric method in the two types of solutions. The results are shown in Fig. 1. Additionally, Fig.2 shows the results obtained by measuring the corrosion potentials on these steel plate samples as immersed in water, by means of a potentiometer associated with a silver-silver chloride electrodes (Ag/AgCl/3.3N KCl) serving as reference electrodes. Additionally, the solution temperature was 20 °C.

As is apparent from Fig.1, the sole addition of orthophosphate ions ($PO_4^{3-}$) limited the corrosion rate to approximately one tenth of the solution to which no such ions were added (Fig.1-A), and the conventionally known corrosion preventive feature of phosphate ions was well demonstrated with this example. Furthermore, the effect by addition of $PO_4^{3-}$ was not indicated when chromate ions ($CrO_4^{2-}$) were allowed to coexist with phosphate ions as shown in Fig.1-B, or when tungstate ions ($WO_4^{2-}$) was similarly allowed to coexist with phosphate ions as shown in Fig.1-D. In contrast, the coexistence of $PO_4^{3-}$ ions with molybdate ions ($MoO_4^{2-}$) (Fig.1-C), or with borate ions ($BO_3^{3-}$) or silicate ions ($SiO_3^{2-}$) (Fig.1-F) appeared more effective. However, the corrosion rate with such coexistence did not differ greatly from that of the single use of $PO_4^{3-}$. However, the coexistence of vanadate ions ($VO_4^{3-}$) and $PO_4^{3-}$ remarkably decreased the corrosion rate to equivalent to or less than the similar ratio obtainable from $CrO_4^{2-}$, and thus demonstrated extremely effective corrosion preventive properties. As is apparent from Fig.2, the potential in the presence of both $PO_4^{3-}$ and $VO_4^{3-}$ ions is remarkably noble when compared to other combination of ions, and this means the excellent corrosion preventive properties.

Example II and Comparative Example II

The effect of coexistence of phosphate ions ($PO_4^{3-}$) and soluble vanadate ions ($VO_4^{3-}$) is demonstrate by comparing it with the corrosion preventive mechanism of chromate ions ($CrO_4^{2-}$).

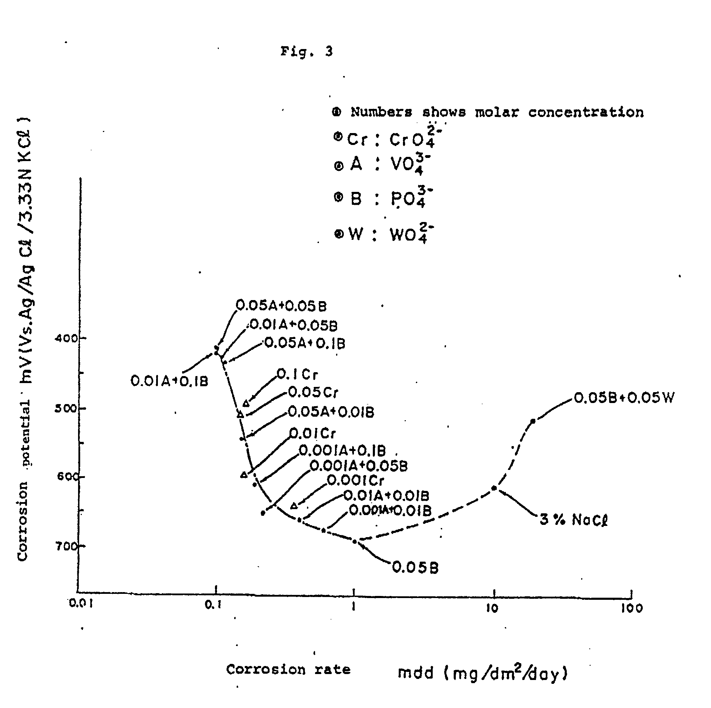

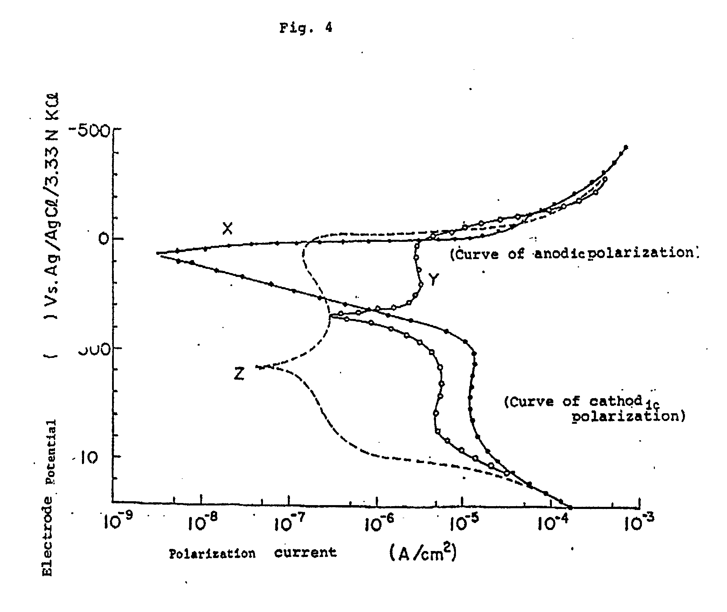

Aqueous solutions (systems open to air, with pH = 7) respectively having a unique concentration were prepared by solely adding $CrO_4^{2-}$ ions into 3 % aqueous NaCl solution. Also, aqueous solutions respectively having a unique $PO_4^{3-}$ concentration and unique $VO_4^{3-}$ concentration were prepared. Further, aqueous solutions having a unique combined concentration of $WO_4^{2-}$ and $VO_4^{3-}$ were prepared. The corrosion rates and corrosion potentials of a steel plate (JIS G 3141) as immersed in such various solutions were determined with a method identical to that of Example I. The results are listed in Fig.3, wherein the results with solutions having $CrO_4^{2-}$ are marked with . △ (comparative), and the results with solutions having both $PO_4^{3-}$ and $VO_4^{3-}$ are marked with ● (Example). As is apparent from Fig.3, the resultant measurement curve overlaps the similar curve of comparative example, which in turn indicates that the method of the invention can provide the results almost identical with those of the corrosion preventive mechanism with chromate ions. Additionally, according to Fig.3, the coexistence system involving tungstate ions ($WO_4^{2-}$) and phosphate ions apparently differs from corrosion preventive mechanism of the invention. This fact was confirmed with a conventionally practiced, electrochemical polarization measurement method, wherein the passive behavior on the surface of anode was examined (Fig.4) by referring to the anodic polarization curve, thereby the passive behavior zone having more than 250 mV amplitude appeared on the anodic polorization curve especially in an area where the corrosion rate in Fig.3 is smaller than 1 mdd and it was confirmed that this curve is similar to that of chromate ions. In other words, there possibility is a stable formation of film on the surface of steel material. The measured results in Fig.4 were obtained by using the samples prepared by having immersed specimens of cold-rolled steel plate (SPCC) respectively in 0.05 mol /l of chromate ion and in solution containing 0.05 mol/l of vanadate ions and 0.05 mol/l of phosphate ions for two weeks. These samples were immersed in a solution comprising 0.025 mol/l $Na_2B_4O_7 \cdot 10H_2O$ and 0.01 mol/l NaCl, where subjected to polarization with a pressurizing ratio of 10 mV/min in order to determine the relevant potential-current curve. The solution was a system open to air and has a temperature of 25 $^\circ$ C. In Fig.4, X denotes a polarization curve obtainable from a sample which had not been immersed in any solution. Y represents the similar curve obtainable from a sample which had been in advance immersed in the solution comprising the coexisting vanadate ions and phosphate ions. Z represents the similar curve obtainable from a sample having been immersed in chromate ion solution. As can be understood from the example associated with Fig.3, the corrosion preventive properties of the present invention are attained by the coexistence system involving both soluble ions of vanadium and the phosphate ions, thereby the coexistence system comprising the combination of these two ions involves the soluble ion concentration of vanadium of more than 0.001 mol/l and phosphate ion concentration of more than 0.001 mol/l satisfactorily achieve the corrosion preventive properties of the invention. For this purpose, the preferred range are 0.001 to 0.05 mol/l for soluble ions of vanadium, and 0.01 to 0.1 mol/l for phosphate ions. The preferred concentration ratio (composition ratio) between these to ions is, when expressed as $(VO_4^{3-})/(PO_4^{3-})$, within a range of 5 to 0.01. These ranges are the ranges where both the effect to make the potential noble and the effect to limit the corrosion rate are attained. In conformity to the conditions of this example, the preferred range of the corrosion potential is more than -660 mV of noble potential in correspondence with the corrosion rate range of less than 1 mdd.

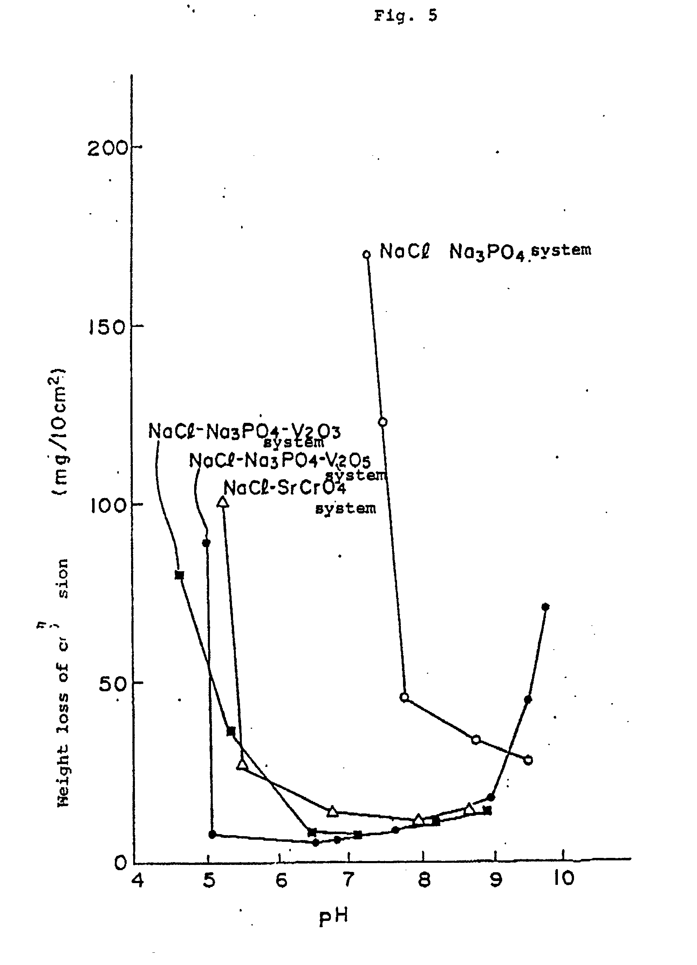

Next. the weight losses by corrosion in accordance with the change in pH were determined for four systems (NaCl-$Na_3PO_4$-$V_2O_5$ system, NaCl-$Na_3PO_4$-$V_2O_3$ system, NaCl-$SrCrO_4$ system, and NaCl-$Na_3PO_4$ system). The pH value of each solution was adjusted by adding HCl or NaOH, whereby a corrosion-oriented weight loss was determined with the gravimetric method on each sample of cold-rolled steel plate respectively immersed for 30 days in each solution which was a system open to air and had a temperature of 25 $^\circ$ C. Fig.5 list the results.

NaCl-$Na_3PO_4$ system shows a larger weight loss due to corrosion. NaCl-$SrCrO_4$ system shows a rather smaller weight loss due to corrosion, as has been conventionally known. In contrast, NaCl-$Na_3PO_4$-$V_2O_3$ system and NaCl-$Na_3PO_4$-$V_2O_5$ system show satisfactory corrosion preventive properties which are comparable or superior to chromate ions. Their capabilities are apparent especially in a pH range of 5 to 9.

## Example III and Comparative Example III

This example demonstrates, by using chromate ions for comparison, the effectiveness of corrosion properties of soluble ion of vanadium and phosphate ions before being respectively added to solution.

Respectively into 3 % NaCl solution was added a type of ions. Accordingly, samples of cold-rolled steel plate were immersed in relevant solution which were left open to air with a temperature of 25 $^\circ$ C. The table I and II list the evaluation results for corrosion preventive properties, wherein $\bigcirc$ marks the case where the weight loss due to corrosion is smaller than the similar loss with addition of chromate ions; $\Delta$ marks the case where the former is approximately equal to the latter; X marks the case where the former is larger than the latter.

Table I lists the effects of phosphate ions, table II the effects of soluble ions of vanadium. In this evaluation, the pH of each solution was adjusted to 7.

Table I

| Example | Ions added | | Weight loss when |
|---|---|---|---|
| | Major soluble ion of vanadium | Major phosphate ions | compared with chromate ions |
| a | Orthovadic acid | Orthophosphoric acid | ◯ |
| b | Orthovadic acid | Pyrophosphoric acid | △ |
| c | Orthovadic acid | Tripolyphosphoric acid | ◯ |
| d | Orthovadic acid | Condensed phosphoric acid | ◯ |
| e | Orthovadic acid | Trimetaphosphoric acid | ◯ |
| f | Orthovadic acid | Tetrametaphosphoric acid | ◯ |
| g | Orthovadic acid | Condensed metaphosphoric acid | ◯ |

Table II

| Example | Ion added | | Weight loss when compared with chromate ions |
| | Major soluble ion of vanadium | Major phosphate ions | |
|---|---|---|---|
| h | Pyrovanadic acid | Orthophosphoric acid | ◯ |
| i | Tripolyvanadic acid | Orthophosphoric acid | ◯ |
| j | Condensed vanadic acid | Orthophosphoric acid | ◯ |
| k | Trimetavanadic acid | Orthophosphoric acid | ◯ |
| l | Tetrametavanadic acid | Orthophosphoric acid | ◯ |
| m | Metavanadic acid higher than pentomer | Orthophosphoric acid | ◯ |
| n | Trivalent vanadyl ions [1] | Orthophosphoric acid | ◯ |
| h | Tetravalent vanadyl ions [1] | Orthophosphoric acid | ◯ |

[1] Valency is changed in an aqueous solution having a pH of 7.

Example V and Comparative Example V

This example demonstrates the effect of oxygen contained in a solution.

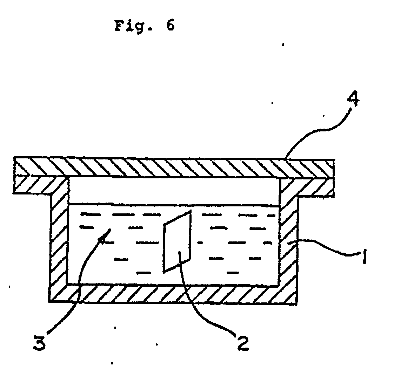

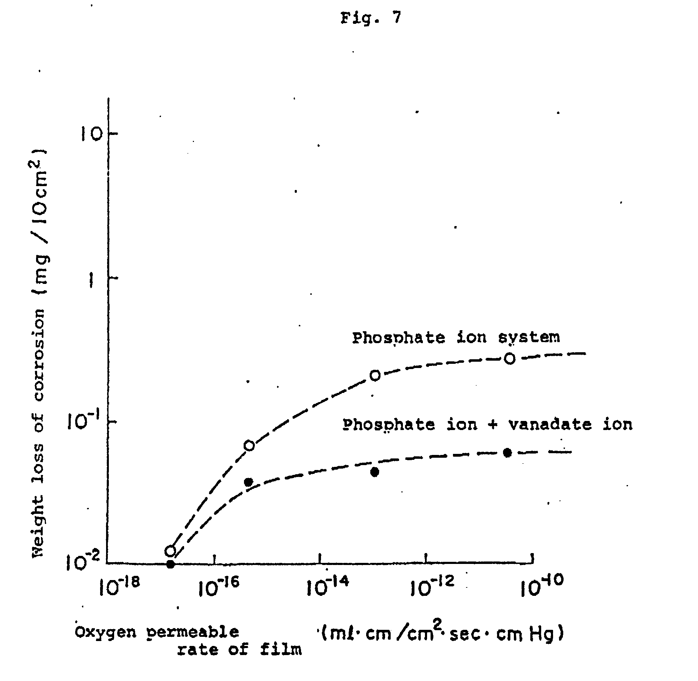

The measurement gas performed with a cell shown in Fig.6. In a glass container 1 were set, under a nitrogen gas atmosphere, a sample of cold-rolled steel plate2, poured thereinto, a pH 7 solution 3 comprising 0.01 % NaCl and containing not only 0.05 mol/l phosphate ions but 0.05 mol/l vanadate ions, or a pH 7 solution 3 comprising 0.01 % NaCl and containing only 0.05 mol/l of phosphate ions, whereby each of films 4 respectively having a unique rate of oxygen permeation was secured onto the upper face of container 1 where grease had been in advance applied to prevent oxygen from permeating through the possible clearance between the upper face of container 1 and the film 4. After these steps, the container 1 as a whole was left in open air, so as to determine the correlation between the corrosion-oriented weight loss of the steel plate sample 2 and the oxygen permeation rate of the film 4. Fig.7 lists the results.

Fig.7 shows that the effect derived from the coexisting phophate ions and vanadate ions is attained by supplying oxygen at a rate of more than $10^{-16}$ (ml.cm/cm$^2$.sec.cmHg)

Incidentally, the measuring method used here to determine the oxygen permeation ratio is a conventional electrochemical method such as one disclosed by the inventors in Shikizai (Color Material), 55, 191 (1982).

(Examples of corrosion preventive pigment)

Examples 1 to 21 and Comparative Examples 1 and 2

11

A phosphorus compound (a) and a vanadium compound (b) were mixed by a mortar for 30 minutes in an amount shown in Table 1, and then calcined in a crucible in an electric furnace at a condition shown in Table 1. The calcined material in the crucible was cooled at a cooling rate of 100 °C/minute. The cooling rate was calculated from a formula; (Furnace temperature - Temperature of the cooled material)/ (Period of time for cooling). For controlling the cooling rate, a cool copper panel was pressed onto the calcined material. The cooled calcined material was ground to powder having an average particle size of not more than 10 $\mu$m. A portion of the vanadium compound used in the process mentioned above was prepared by baking the components shown in Table 1 at 1,200 °C.

The powder was dispersed in a 3 % NaCl solution to form a 10 g/liter dispersion in which a bright steel panel (JIS 3141 G SPCC(SB)) was immersed for 30 days. Weight loss of the panel was determined and compared with strontium chromate of a same amount. In the evaluation, "good" shows superior to strontium chromate, "Normal" shows equal to it and "bad" shows inferior to it.

The present example also includes a test for blister inhibition. The test was conducted on the coating of the substrate under a temperature gradient condition and an electric corrosion preventive condition.

Preparation of paint

The following ingredients were mixed by a sand mill to form a paint.

| Ingredients | Parts by weight |
|---|---|
| Coal tar pitch varnish | 30 |
| Polyol resin varnish | 12 |
| Extender | 20 |
| The corrosion preventive pigment of the present invention | 2 |
| Sag-resistance agent | 0.5 |
| Methyl isobutyl ketone | 5 |
| Xylole | 20.5 |
| A reaction product of toluidine diisocyanate and polyol (Colonate 55 from Nippon Polyurethane Co. Ltd.) | 10 |

The resultant paint was spray coated on a dull steel panel (JIS G 3141 SPCC SD) and dried for 10 days at ambient temperature to form a film having 200 $\mu$m. The coated panel was subjected to a blister test as follow:

Blister test under temperature gradience:

A temperature slope was set to 40 °C on the coated side and to 20 °C on the other side and the coated panel was immersed in a water for 14 days, after which blisters on the coating was visually evaluated.

Excellent - very good in comparison a comparative sample.

Good - superior to the comparative sample.

Normal - equal to the comparative sample.

Bad - inferior to the comparative sample.

The comparative sample was obtained from Comparative Example 1 in which any corrosion preventive pigment was not formulated, but an extender pigment was added.

EP 0 259 748 B1

Peeling property under electric anticorrosion
A zinc metal was connected to the coated panel and immersed in a 3 % NaCl solution for one month at 30 °C. Evaluation was made by a creepage (1/mm) from a scratch.

Excellent  $0 < \iota \leq 2$

Good  $2 < \iota \leq 5$

Normal  $5 < \iota \leq 8$

Bad  $8 < \iota \leq 12$

Very bad  $12 < \iota$

The result is shown in Table 1.

Table 1

| Example | Phosphorus compound(a) | Vanadium compound(b) | Molar ratio $P_2O_5/V_2O_5$ | Calcining temperature $^\circ C$ | Calcining time (h) | Cooling rate $^\circ C/min$ | pH | Weight loss of corrosion | Blister under temperature gradience | Creepage under electric anticorrosion |
|---|---|---|---|---|---|---|---|---|---|---|
| 1 | Orthophosphoric acid | $3CaO.V_2O_5$ melt | 5/1 | 600 | 1 | 100 | 2.9 | Bad | Good | Normal |
| 2 | Metaphosphoric acid | $CaO.V_2O_5$ melt | 1/1 | 800 | 1 | 100 | 2.9 | Bad | Good | Normal |
| 3 | Pyrophosphoric acid | $MnO.V_2O_5$ melt | 1/1 | 800 | 1 | 100 | 2.9 | Bad | Good | Normal |
| 4 | Calcium phosphate | Vanadium oxide $(V_2O_5)$ | 1/1 | 1100 | 2 | 300 | 4.8 | Normal | Excellent | Good |
| 5 | Magnesium mono-hydrogenphosphate | Vanadium oxide $(V_2O_5)$ | 2/1 | 1100 | 2 | 300 | 6.0 | Good | Good | Good |
| 6 | Magnesium ortho-phosphate | $CaO.V_2O_5$ melt | 1/1 | 1400 | 2 | 500 | 6.1 | Good | Good | Excellent |
| 7 | Sludge in zinc phosphating | $3CaO.V_2O_5$ melt | 1/1 | 1400 | 2 | 600 | 6.9 | Good | Normal | Good |
| 8 | Calcium metaphosphate | $4CaO.V_2O_5$ melt | 1/1 | 1400 | 2 | 100 | 8.4 | Good | Bad | Normal |
| 9 | Aluminum tripoly-phosphate type pigment (1) | $ZnO.V_2O_5$ melt | 1/1 | 1400 | 3 | Slow* | 6.0 | Bad | Normal | Good |
| 10 | Composit phosphate pigment (2) | Vanadium oxide (V) $(V_2O_5)$ | 10/1 | 1400 | 3 | Slow | 2.0 | Bad | Excellent | Excellent |
| 11 | Calcium metaphosphate | Vanadium oxide (III) $(V_2O_3)$ | 2/1 | 1100 | 3 | Slow | 3.2 | Bad | Excellent | Good |
| 12 | $P_2O_5$ | Vanadium oxide (IV) $(V_2O_4)$ | 2/1 | 1100 | 3 | Slow | 2.1 | Bad | Good | Normal |

14

Table 1 continue

| | | | | | | | | | | |
|---|---|---|---|---|---|---|---|---|---|---|
| 13 | Magnesium metaphosphate | $3CaO.V_2O_5$ melt | 20/1 | 1200 | 2 | Slow | 5.7 | Good | Good | Good |
| 14 | Calcium metaphosphate | $MgO.V_2O_5$ melt | 1/1 | 1200 | 1 | 200 | 4.5 | Good | Excellent | Good |
| 15 | $P_2O_5$ | $4MnO.V_2O_5$ melt | 1/1 | 1200 | 2 | 300 | 7.3 | Good | Bad | Good |
| 16 | Calcium metaphosphate | $CaO.V_2O_5$ melt | 50/1 | 110 | 2 | 300 | 3.5 | Bad | Excellent | Good |
| 17 | Calcium phosphate | Vanadyl trichloride | 1/1 | 1200 | 2 | Slow | 5.8 | Good | Normal | Normal |
| 18 | Same as Example 6 | Same as Example 6 | 1/1 | 1200 | 2 | Slow | 6.2 | Good | Normal | Good |
| 19 | A mixture of $Zn(PO_4)_2$ and orthophosphoric acid | $2MgO.V_2O_5$ melt | 2/1 | 1300 | 2 | 100 | 5.1 | Normal | Good | Good |
| 20 | A mixture of $CaHPO_4$ and $P_2O_5$(mol ratio1:2) | A mixture of $V_2O_5$ and $V_2O_4$ (molar ratio 1:1) | 5/1 | 1200 | 2 | 100 | 2.5 | Bad | Good | Normal |
| Comparative Example 1 | None | None | | | | | 6.5 | Bad | Normal | Normal |
| 2 | Strontium chromate | | | | | | 8.0 | Normal | Bad | Normal |

Examples 13 and 16 are light color pigments.

(1) Available from Teikoku Kako Co. Ltd. as K-white 82

(2) Available from Mizusawa Chemical Industries Co., Ltd as Mizukanex 300

Example 21 to 27 and Comparative Example 3

An amount of the pigment of Example 5 was changed and subjected to a salt spray test.
The corrosion preventive pigment of the present invention, an extender and a color pigment were formulated to a thermosetting epoxypolyurethane resin to form a paint of 100 parts by weight. The paint was coated on a dull steel panel in a thickness of 20 $\mu$m to cure at 190 °C for one minutes. The resultant coated panel was subjected to the salt spray test to evaluate creepage and blister. The test was carried out using the other resin type paint, i.e. an epoxy rein type paint (Copon Mastic Primer available from Nippon Paint Co. Ltd.) as a cold setting resin and an electrodeposition paint (Power Top U-30 available from Nippon Paint Co. Ltd.). In case of Copon Mastic Primer, curing was carried out at ambient temperature for 10 days in a thickness of 50 $\mu$m, of which result is shown in Example 26. In case of Power Top U-30, the paint was electrodeposited at 150 Volt for 3 minutes and then cured at 170 °C for 30 minutes in a thickness of 25 $\mu$m, of which result is shown in Example 27.

Creepage was determined a creepage width from a scribe cut to the substrate by a knife. A standard sample was made by adding strontium chromate in an amount of 20 % by weight based on the solid content instead of the corrosion preventive pigment. Evaluation was made in comparison with the standard sample to express "excellent", "good", "Normal", and "bad".

Blister was evaluated by using the coated panel in a salt spray testing machine (35 °C, 500 hours) as follow;

Good - substantially no blisters
Normal - a small number of blisters
Bad - many blisters

Table 2

| Example | Amount of the corrosion preventive pigment | Amount of the other pigments | Amount of vehicle | Oxygen permeability (P) | Salt spray test Creepage | Salt spray test Blister |
|---|---|---|---|---|---|---|
| 21 | 0.1 | 19.9 | 80 | $5 \times 10^{-10}$ | Good | Good |
| 22 | 0.5 | 19.5 | 80 | $5 \times 10^{-10}$ | Good | Good |
| 23 | 5.0 | 15.0 | 80 | $5 \times 10^{-10}$ | Good | Good |
| 24 | 20 | 10.0 | 70 | $5 \times 10^{-10}$ | Good | Good |
| 25 | 50 | 0 | 50 | $3 \times 10^{-9}$ | Normal | Normal |
| 26 | 5.0 | 15.5 | 80 | $9 \times 10^{-10}$ | Good | Good |
| 27 | 2.0 | Not determined | Not determined | $2 \times 10^{-11}$ | Excellent | Good |
| Comparative Ex. 3 | 10 Strontium chromate | 10 | 80 | $5 \times 10^{-10}$ | Normal | Normal |

Examples 28 to 44

A test was done as generally described in Example 1, with the exception that the phosphorus compound (a), a vanadium compound (b) and the network modifier (c) as shown in Table 3 were employed. The result is shown in Table 3.

17

Table 3

| Example | Phosphorus compound(a) | Vanadium compound(b) | Network modifier (c) | Molar ratio $P_2O_5:V_2O_5:MO$ * | Calcining temp (°C) | Calcining time (hour) | Cooling rate (°C/min) | pH ** | Weight loss of corrosion |
|---|---|---|---|---|---|---|---|---|---|
| 28 | Composit phosphate pigment | Vanadium oxide (V) ($V_2O_5$) | MgO | 1 : 1 : 4 | 1400 | 2 | Slow | 6.2 | Good |
| 29 | Composit phosphate pigment | Vanadium oxide (V) ($V_2O_5$) | MgO | 0.5 : 1 : 3 | 1400 | 2 | Slow | 6.8 | Normal |
| 30 | $Ca(H_2PO_4)_2$ | Vanadium oxide (V) ($V_2O_5$) | $3CaO.B_2O_3$ melt | 2 : 1 : 6 | 1100 | 1 | 300 | 7.8 | Good |
| 31 | $MgHPO_4$ | Vanadium oxide (V) ($V_2O_5$) | CaO | 2.5 : 1 : 7 | 1100 | 1 | 300 | 6.5 | Good |
| 32 | $Mg_3(PO_4)_2$ | Vanadium oxide (V) ($V_2O_5$) | CaO | 3 : 1 : 10 | 1400 | 3 | 600 | 7.1 | Good |
| 33 | Sludge in zinc phosphate | Vanadium (V) ($V_2O_5$) | A mixture of CaO and MgO(1:1 mol) | 1 : 1 : 4 | 1400 | 3 | 600 | 7.1 | Normal |
| 34 | Aluminium tri-polyphosphate type pigment (C) | Vanadium oxide (V) ($V_2O_5$) | MgO | 5 : 1 : 15 | 1100 | 2 | Slow | 6.3 | Normal |
| 35 | Orthophosphoric acid | Vanadium oxide (V) ($V_2O_5$) | MnO | 10 : 1 : 22 | 1000 | 2 | 300 | 7.8 | Good |
| 36 | Metaphosphoric acid | Vanadium oxide (V) ($V_2O_5$) | ZnO and MgO (molar ratio 3:6) | 2. : 1 : 9 | 1400 | 2 | 300 | 8.1 | Good |
| 37 | $P_2O_5$ | Vanadium oxide (III) ($V_2O_3$) | CaO | 1 : 1 : 2 | 1100 | 2 | Slow | 6.3 | Good |

EP 0 259 748 B1

Table 3 continue

| 38 | $P_2O_5$ | A mixture of $V_2O_5$ and $V_2O_3$ (mol ratio 1:1) | CaO | 1 : 1 : 4 | 650 | 1 | 300 | 6.6 | Good |
|----|----------|------|------|-----------|------|---|------|-----|--------|
| 39 | $P_2O_5$ | $2MgO \cdot V_2O_5$ melt | $CaSiO_3$ | 2 : 1 : 9 | 1400 | 2 | Slow | 8.1 | Normal |
| 40 | A mixture of $P_2O_5$ and metaphophoric acid | $MnO \cdot V_2O_5$ melt | $CaCO_3$ | 2 : 1 : 6 | 1100 | 2 | 500 | 7.5 | Good |
| 41 | $P_2O_5$ | $ZnO \cdot V_2O_5$ melt | $PbCO_3$ | 2 : 1 : 6 | 1400 | 2 | 500 | 5.2 | Good |
| 42 | $P_2O_5$ | $CoO \cdot V_2O_5$ melt | $Ca(OH)_2$ | 2 : 1 : 6 | 1100 | 2 | 500 | 7.5 | Good |
| 43 | $P_2O_5$ | $V_2O_5$ | NaOH | 1 : 1 : 4 | 800 | 2 | 100 | 6.4 | Good |
| 44 | Metaphosphoric acid | $V_2O_5 \cdot V_2O_4$ | $Na_2O$ | 1 : 1 : 4 | 1000 | 2 | 100 | 6.5 | Good |

[1] Available from Mizusawa Chemical Industries Co. Ltd as MIZUKANEX 300.
* HO or $H_2O$
** One gram of particles was dispersed in 100 ml of water and left at 25 °C for 48 hours. After that, pH was determined
*** Slow means a cooling rate of less than 50 °C/min.
Example 34 had light color.

(2) Available from Teikoku Kako Co., Ltd. as K-white 82.

Example 45 to 51 and Comparative Example 4

An amount of the pigment of Example 31 was changed and subjected to a salt spray test, as generally described in Examples 22 to 27 and Comparative Example 3. The result is shown in Table 4.

Table 4

| Example | Amount of the corrosion preventive pigment | Amount of the other pigments | Amount of vehicle | Oxygen permeability (P) | Salt spray test | |
|---|---|---|---|---|---|---|
| | | | | | Creepage | Blister |
| 45 | 0.1 | 19.9 | 80 | $5 \times 10^{-10}$ | Good | Good |
| 46 | 0.5 | 19.5 | 80 | $5 \times 10^{-10}$ | Good | Good |
| 47 | 5.0 | 15.0 | 80 | $5 \times 10^{-10}$ | Excellent | Good |
| 48 | 20 | 10.0 | 70 | $5 \times 10^{-10}$ | Excellent | Good |
| 49 | 50 | 0 | 50 | $7 \times 10^{-9}$ | Good | Normal |
| 50 | 5.0 | 15.0 | 80 | $1 \times 10^{-9}$ | Good | Good |
| 51 | 2.0 | Not determined | Not determined | $3 \times 10^{-11}$ | Excellent | Good |
| Comparative Ex. 4 | 10 Strontium chromate | 10 | 80 | $5 \times 10^{-10}$ | Normal | Normal |

Examples 52 to 63 and Comparative Examples 5 and 6

A blister test was done as generally described in Example 1, with the exception that the phosphorus compound (a), a vanadium compound (b) and the network modifier (c) as shown in Table 5 were employed. The result is shown in Table 5.

20

Table 5

| Example | Phosphorus compound(a) | Vanadium compound(b) | Network modifier (c) | Molar ratio $P_2O_5:V_2O_5:MO$ | Calcining temperature ($^\circ C$) | Calcining time (hour) | Cooling rate ($^\circ C/min$) | pH | Blister temperature gradience | Creepage under electric anti-corrosion |
|---|---|---|---|---|---|---|---|---|---|---|
| 52 | $P_2O_5$ | $V_2O_5$ | $CaSiO_3$ | 1 : 0.5 : 4 | 1400 | 3 | 100 | 2.8 | Good | Normal |
| 53 | $P_2O_5$ | $V_2O_5$ | $MgO$ | 1 : 0.1 : 1 | 1200 | 1 | 100 | 4.4 | Good | Good |
| 54 | $P_2O_5$ | $V_2O_5$ | $Ca(OH)_2$ | 1 : 0.2 : 1 | 1200 | 1 | 100 | 4.0 | Good | Good |
| 55 | $P_2O_5$ | $V_2O_5$ | $CaCO_3$ | 1 : 1 : 1 | 1200 | 1 | 100 | 2.9 | Good | Good |
| 56 | $P_2O_5$ | $V_2O_5$ | $ZnO$ | 1 : 0.2 : 1 | 1200 | 1 | 300 | 3.6 | Good | Excellent |
| 57 | $P_2O_5$ | $V_2O_5$ | $MnCO_3$ | 1 : 0.2 : 1 | 1200 | 1 | 300 | 3.9 | Good | Good |
| 58 | 85 % phosphoric acid | $V_2O_5$ | $BaCO_3$ | 1 : 0.2 : 1 | 1000 | 1 | 300 | 4.2 | Good | Good |
| 59 | Metaphosphoric acid | $V_2O_5:V_2O_4$(mol ratio 1:1) | $Zn(OH)_2$ | 1 : 1 : 1 | 1000 | 1 | 300 | 3.0 | Good | Good |
| 60 | Metaphosphoric acid | $V_2O_5$ | $Co(OH)_2$ | 1 : 0.1 : 1 | 1000 | 1 | 300 | 4.5 | Good | Good |
| 61 | Metaphosphoric acid | $V_2O_5$ | $Fe_2O_3$ | 1 : 0.5 : 1 | 1400 | 1 | Slow | 3.2 | Good | Good |
| 62 | Metaphosphoric acid | $V_2O_5:V_2O_3$(molar ratio 1:1) | $CaO$ | 1 : 1 : 1 | 800 | 2 | 100 | 2.8 | Good | Good |
| 63 | $P_2O_5$ | $V_2O_5$ | $Ca(OH)_2$ | 1 : 0.01 : 1 | 800 | 2 | Slow | 2.1 | Good | Normal |

EP 0 259 748 B1

Examples 64 to 73

A test and a preparation of the pigment were done as generally described in Example 1, with the exception that the phosphorus compound (a), a vanadium compound (b), the network modifier (c)

Table 3 continue

| | | | | |
|---|---|---|---|---|
| Comparative Example 5 | Body Pigments | 6.5 | Normal | Normal |
| 6 | Strontium chromate | 8.0 | Bad | Good |

\* HO or $H_2O$
\*\* Slow means a cooling rate of less than 50 °C/min.

and the glassy material (d) as shown in Table 6 were employed. The result is shown in Table 6.

Table 6

| Example | Phosphorus compound(a) | Vanadium compound(b) | Network modifier (c) | Molar ratio P₂O₅:V₂O₅:H₂O | Glassy material (d) | Weight ratio (Times) | pH | Weight loss of corrosion |
|---|---|---|---|---|---|---|---|---|
| 64 | Na₃PO₄ | V₂O₅ | NaOH | 1 : 1 : 3 | Pyrex | 100 | 8.0 | Good |
| 65 | Na₃PO₄ | V₂O₅ | NaOH | 1 : 1 : 4 | Pyrex | 200 | 9.0 | Normal |
| 66 | Na₃PO₄ | V₂O₅ | NaOH | 1 : 1 : 1 | Pyrex | 50 | 5.2 | Good |
| 67 | 85 % phosphoric acid | V₂O₅ | KOH | 1 : 1 : 3 | Pyrex | 10 | 4.0 | Normal |
| 68 | 85 % phosphoric acid | V₂O₅ | - | 1 : 1 : 0 | Pyrex | 100 | 7.2 | Good |
| 69 | 85 % phosphoric acid | NaVO₃ | Na₂CO₃ | 1 : 1 : 2 | Pyrex | 20 | 6.5 | Good |
| 70 | Metaphosphoric acid | V₂O₅ | LiOH | 2 : 1 : 4.5 | Pyrex | 50 | 6.8 | Good |
| 71 | Metaphosphoric acid | V₂O₅ | LiOH | 2 : 1 : 4.5 | C glass | 50 | 7.5 | Good |
| 72 | Metaphosphoric acid | V₂O₅ | LiOH | 2 : 1 : 4.5 | E glass | 50 | 7.8 | Good |
| 73 | Metaphosphoric acid | V₂O₅ | LiOH | 2 : 1 : 4.5 | Pyrex | 10 | 7.5 | Good |

Examples 64, 65, 68, 69, 70, 71, and 72 had light color.

Calcining temperature is 1200°C for all samples.

Example 74 to 80 and Comparative Example 4

An amount of the pigment of Example 73 was changed and subjected to a salt spray test, as generally described in Examples 21 to 27 and Comparative Example 3. The result is shown in Table 7.

Table 7

| Example | Amount of the corrosion preventive pigment | Amount of the other pigments | Amount of vehicle | Oxygen permeability (P) | Salt spray test | |
|---|---|---|---|---|---|---|
| | | | | | Creepage | Blister |
| 74 | 0.1 | 19.9 | 80 | $5 \times 10^{-10}$ | Good | Good |
| 75 | 0.5 | 19.5 | 80 | $5 \times 10^{-10}$ | Good | Good |
| 76 | 5.0 | 15.0 | 80 | $5 \times 10^{-10}$ | Excellent | Good |
| 77 | 20 | 10.0 | 70 | $5 \times 10^{-10}$ | Excellent | Good |
| 78 | 50 | 0 | 50 | $7 \times 10^{-9}$ | Normal | Normal |
| 79 | 5.0 | 15.0 | 80 | $7 \times 10^{-10}$ | Good | Good |
| 80 | 2.0 | Not determined | Not deter- mined | $1 \times 10^{-11}$ | Good | Good |
| Compa- rative Ex. 7 | 10 Strontium chromate | 10 | 80 | $5 \times 10^{-10}$ | Normal | Normal |

Examples 52 to 63 and Comparative Examples 8 and 9

24

A blister test was done as generally described in Example 1, with the exception that the phosphorus compound (a), a vanadium compound (b), the network modifier (c) and the glassy material as shown in Table 8 were employed. The result is shown in Table 8.

Table 8

| Example | Phosphorus compound(a) | Vanadium compound(b) | Network modifier(c) | Molar ratio $P_2O_5 : V_2O_5 : NO$ | Glassy Material Wt.ratio (Times) | Calcining temperature (°C) | Calcining time (hour) | pH | Blister temperature gradience | Creepage under electric anti-corrosion |
|---|---|---|---|---|---|---|---|---|---|---|
| 81 | 85 % phosphoric acid Metaphosphoric acid | $V_2O_5$(0.4 mole) $V_2O_3$(0.1 mole) | CaO | 1 : 0.5 : 4 | E glass (20) | 1300 | 2 | 3.7 | Good | Excellent |
| 82 | 85 % phosphoric acid Metaphosphoric acid | Sodium metavanadate | $Na_2CO_3$ | 1 : 1 : 1 | E glass (10) | 1200 | 2 | 4.5 | Good | Good |
| 83 | $P_2O_5$ | $V_2O_5$ | LiOH | 1 : 0.1 : 0.1 | C glass (50) | 1000 | 2 | 6.2 | Good | Good |
| 84 | Metaphosphoric acid | $V_2O_5$ | - | 1 : 1 : 0 | Pyrex (10) | 1200 | 3 | 4.2 | Good | Good |
| Comparative Example 8 | Extender | | | | | | | 6.5 | Normal | Normal |
| 9 | Strontium chromate | | | | | | | 8.0 | Bad | Good |

Examples 81-84 had light color.

Example 85 to 115

In the present example, the corrosion weight loss of a mixture of the phosphorus compound and the vanadium compound was compared with that of the chromate ions. The result was shown in Table 9. The corrosion weight loss was tested as follow: A steel test panel of 70 X 150 mm having a gram was immersed in an aqueous solution containing the corrosion preventive pigment of the present invention or a chromate pigment for 20 days and dried. The weight of the panel (b gram) was then measured and a weight loss was calculated from an equation:

Weight loss = (a - b)/210(g/cm$^2$)

Table 9

| Example numbers | Phosphorus compound species | pH | k µS/cm | Vanadium compound Species | pH | k µS/cm | $P_2O_5/V_2O_5$ wt. ratio | Evaluation |
|---|---|---|---|---|---|---|---|---|
| 85 | Calcium hydrogenphosphate | 7.1 | 163 | $Mn_3O_4 \cdot V_2O_5$[a] | 7.1 | 63 | 1/1 | Good |
| 86 | Tricalcium phosphate | 7.3 | 33 | $Mn_3O_4 \cdot V_2O_5$[a] | 7.1 | 63 | 3/1 | Normal |
| 87 | Magnesium hydrogen-phosphate | 8.3 | 200 | $Mn_3O_4 \cdot V_2O_5$[a] | 7.1 | 63 | 1/1 | Good |
| 88 | Barium hydrogenphosphate | 7.5 | 69 | $Mn_3O_4 \cdot V_2O_5$[a] | 7.1 | 63 | 2/1 | Normal |
| 89 | Magnesium hydrogen-phosphate | 7.2 | 400 | $Mn_3O_4 \cdot V_2O_5$[a] | 7.1 | 63 | 1/1 | Good |
| 90 | Calcium bis(hydrogen-phosphate) | 3.4 | 4400 | $3MnO_2 \cdot V_2O_5$[b] | 7.7 | 30 | 1/1 | Good |
| 91 | Calcium hydrogenphosphate | 7.1 | 150 | $MnO_2 \cdot V_2O_5$[b] | 5.0 | 150 | 1/1 | Good |
| 92 | Tricalcium phosphate | 7.4 | 300 | $MnO_2 \cdot V_2O_5$[b] | 5.0 | 150 | 1/1 | Normal |
| 93 | Magnesium hydrogen-phosphate | 7.5 | 520 | $MnO_2 \cdot V_2O_5$[b] | 5.0 | 150 | 1/1 | Good |
| 94 | Trimagnesium phosphate | 9.0 | 90 | $MnO_2 \cdot V_2O_5$[b] | 5.0 | 150 | 1/1 | Good |
| 95 | Calcium hydrogenphosphate | 7.1 | 150 | $2MnO_2 \cdot V_2O_5$[b] | 6.6 | 90 | 2/1 | Good |
| 96 | Magnesium hydrogen-phosphate | 7.5 | 520 | $2MnO_2 \cdot V_2O_5$[b] | 6.6 | 90 | 3/1 | Good |
| 97 | Tricalcium phosphate | 7.4 | 30 | $MnO_2 \cdot 10V_2O_5$[b] | 4.5 | 300 | 5/1 | Good |

EP 0 259 748 B1

Table 9 continue

| | | | | | | | | |
|---|---|---|---|---|---|---|---|---|
| 98 | Magnesium hydrogen-phosphate | 7.5 | 520 | $10MnO_2 \cdot V_2O_5$ [b] | 8.1 | 30 | 1/2 | Normal |
| 99 | Calcium hydrogenphosphate | 7.1 | 150 | $3MnO_2 \cdot V_2O_5$ [b] | 7.7 | 30 | 1/1 | Good |
| 100 | Aluminum tripolyphosphate | 6.6 | 30 | $3MnO_2 \cdot V_2O_5$ [b] | 7.7 | 30 | 2/1 | Good |
| 101 | Aluminum phospho-molybdate | 6.9 | 30 | $3MnO_2 \cdot V_2O_5$ [b] | 7.7 | 30 | 2/1 | Good |
| 102 | Manganese hydrogen-phosphate | 7.2 | 400 | Calcium pyrovanadate | 8.5 | 230 | 1/1 | Good |
| 103 | Sludge of zinc phosphate treatment | 6.5 | 190 | Calcium pyrovanadate | 8.5 | 230 | 1/1 | Normal |
| 104 | Zinc tripolyphosphate | 7.5 | 410 | $3ZnO \cdot V_2O_5$ | 5.8 | 370 | 1/1 | Good |
| 105 | Magnesium hydrogen-phosphate | 7.2 | 400 | $3ZnO \cdot V_2O_5$ | 5.8 | 370 | 2/1 | Good |
| 106 | Calcium metaphosphate | 8.1 | 40 | $3Ca(OH)_2 \cdot V_2O_5$ | 7.8 | 58 | 2/1 | Good |
| 107 | Aluminum tripolyphosphate | 6.6 | 26 | $3Ca(OH)_2 \cdot V_2O_5$ | 7.8 | 58 | 5/1 | Good |
| 108 | Aluminum phosphorus molybdate | 6.9 | 29 | $3Ca(OH)_2 \cdot V_2O_5$ | 7.8 | 58 | 10/1 | Good |
| 109 | Aluminum tripolyphosphate | 6.6 | 26 | $2Co(OH)_2 \cdot V_2O_5$ | 6.0 | 100 | 1/1 | Normal |
| 110 | Aluminum tripolyphosphate | 6.6 | 26 | $Ni_2O_3 \cdot V_2O_5$ | 5.8 | 73 | 5/1 | Good |
| 111 | Aluminum tripolyphosphate | 6.6 | 26 | $3MnO \cdot V_2O_5$ | 7.7 | 42 | 10/1 | Good |

EP 0 259 748 B1

**Table 9 continue**

| 112 | Aluminum tripolyphosphate | 6.6 | 26 | $Mn_2O_3 \cdot V_2O_5$ | 7.0 | 90 | 10/1 | Good |
| 113 | Magnesium hydrogen-phosphate | 7.2 | 400 | $Co_3O_4 \cdot V_2O_5$ | 6.7 | 360 | 1/1 | Good |
| 114 | Magnesium hydrogenphosphate | 7.2 | 400 | $5/3CaO \cdot V_2O_5$ | 7.7 | 950 | 1/1 | Good |
| 115 | Calcium hydrogenphosphate | 7.1 | 163 | $V_2O_5 \cdot Ca(OH)_2 \cdot Ca(H_2PO_4)_2 \cdot H_2O$ [c] | 7.9 | 350 | 1/1 | Good |

[a] $V_2O_5$ and $V_3O_4$ were uniformly mixed and baked at 1100 °C for 2 hours. The resultant melt was ground by a hummer mill to a particle sized of less than imm and then further ground by a jet mill to 10 μm. The other vanadium compound were prepared as generally described above, unless otherwise indicated.

[b] The manganese compound and the vanadium compound were uniformly mixed and baked for 2 hours

29

at 1100 °C for Examples 90 to 94, 1200 °C for Examples 95 and 96, 900 °C for Example 97, 1400 °C for Example 98 and 1150 °C for Examples 99 to 101. The resultant melt was ground to less than 10 μm.
$^c$ $V_2O_5$, $Ca(H_2PO_4)$ and $Ca(OH)_2$ were mixed by an automatic mortar at a molar ratio of 0.7:0.5:1.4 for 5 hours. The resultant mixture was dried at 100 °C for one hour and then ground by a mortar for one hour.

(Examples of the corrosion preventive coating composition)

Reference Example 1

A corrosion preventive agent was prepared by mixing the components shown in Table i.

Table i

| Number | Phosphorus compound (Parts by weight) (mol) | Vanadium compound (Parts by weight) (mol) | Network modifier (mol) |
|---|---|---|---|
| 1-a | Magnesium hydrogen-phosphate (5) | $Mn_2O_3 \cdot V_2O_5$ melt (5) | |
| 1-b | Magnesium hydrogen-phosphate (7) | $3ZnO \cdot V_2O_5$ melt (3) | |
| 1-c | Calcium hydrogen-phosphate (5) | $Mn_2O_3 \cdot V_2O_5$ melt (5) | |
| 1-d | Calcium hydrogenphosphate Calcium oxide (1) | vanadium oxide($V_2O_5$)* calcium dihydrogen phosphate ($Ca(H_2PO_4)_2 \cdot H_2O$) calcium hydroxid ($Ca(OH)_2$) | |
| 1-e | Magnesium hydrogen-phosphate (10) | $3MnO_2 \cdot V_2O_5$ melt (1) | |
| 1-f | Magnesium hydrogen-phosphate (10) | $V_2O_5$ (1) | |
| 1-g | Magnesium hydrogen-phosphate (87) | $V_2O_5$ (1) | MgO (1) |
| 1-h | Magnesium hydrogen-phosphate (10) | $V_2O_5$ (1) | MgO (0.9) |
| 1-i | Magnesium hydrogen-phosphate (75) | $V_2O_5$ (1) | $Ca(OH)_2$ (1.6) |
| 1-j | Calcium hydrogen-phosphate (10) | $V_2O_5$ (1) | $Ca(OH)_2$ (0.4) |
| 1-k | Trimagnesium phosphate (10) | $V_2O_5$ (1) | |
| 1-l | Calcium hydrogen-phosphate (1) | $MnO_2 \cdot V_2O_5$ melt (1) | |

*$V_2O_5$, $Ca(H_2PO_4)_2 \cdot H_2O$, and $Ca(OH)_2$ were mxied in 0.7:0.5:1.4 respectively by molar ratio. Then, the mixture was remixed by means of a mortar, and the mixed compound was dried at $100°C$ for 1 hour.

Reference Example 2

The components shown in Table ii was melted in the condition shown in Table ii and ground to obtain a corrosion preventive agent.

Table ii

| Number | Phosphorus Compound | Vanadium compound | Molar ratio $P_2O_5/V_2O_5$ | Calcining Temp.°C | Calcining period (h) | Cooling rate (°C/min) |
|---|---|---|---|---|---|---|
| 2-a | Orthophosphoric acid | $3CaO.V_2O_5$ melt | 5/1 | 600 | 1 | 100 |
| 2-b | Metaphosphoric acid | $CaO.V_2O_5$ melt | 1/1 | 800 | 1 | 100 |
| 2-c | Pyrophosphoric acid | $MgO.V_2O_5$ melt | 1/1 | 800 | 1 | 100 |
| 2-d | Calcium hydrogen-phosphate | $V_2O_5$ | 1/1 | 1100 | 2 | 300 |
| 2-e | Magnesium hydrogen-phosphate | $V_2O_5$ | 2/1 | 1100 | 2 | 300 |
| 2-f | Magnesium Ortho-phosphate | $CaO.V_2O_5$ melt | 1/1 | 1400 | 2 | 500 |
| 2-g | Zinc phosphate treated sludge | $3CaO.V_2O_5$ melt | 1/1 | 1400 | 2 | 600 |
| 2-h | Calcium meta-phosphate | $MgO.V_2O_5$ melt | 1/1 | 1200 | 1 | 200 |
| 2-i | Calcium meta-phosphate | $CaO.V_2O_5$ melt | 50/1 | 1100 | 2 | 300 |

Reference Example 3

31

The components shown in Table iii was melted in the condition shown in Table iii and ground to obtain a corrosion preventive agent.

Table iii

| Number | Phosphorus Compound | Vanadium compound | Network modifier | Molar ratio $P_2O_5/V_2O_5/MO^*$ | Calcining Temp(°C) | Calcining period (h) | Cooling rate (°C/min) |
|---|---|---|---|---|---|---|---|
| 3-a | Ca(H$_2$PO$_4$)$_2$ | V$_2$O$_5$ | 3CaO·B$_2$O$_3$ melt | 2/1/6 | 1100 | 1 | 300 |
| 3-b | MgHPO$_4$ | V$_2$O$_5$ | CaO | 2.5/1/10 | 1100 | 1 | 300 |
| 3-c | Mg$_3$(PO$_4$)$_2$ | V$_2$O$_5$ | CaO | 3/1/10 | 1400 | 3 | 600 |
| 3-d | P$_2$O$_5$ | A mixture of V$_2$O$_5$ and V$_2$O$_3$ (1:1 mole ratio) | CaO | 1/1/4 | 650 | 1 | 300 |
| 3-e | P$_2$O$_5$ | CoO·V$_2$O$_5$ melt | Ca(OH)$_2$ | 2/1/6 | 1100 | 1 | 500 |

* MO can be MO, M$_2$O, or M$_2$O$_3$.

Reference Example 4

The components shown in Table iv was melted at 1400°C in the condition shown in Table iv and ground to obtain a corrosion preventive agent.

Table iv

| Number | Phosphorus Compound | Vanadium compound | Network modifier | Molar ratio $P_2O_5/V_2O_5/MO$ | Glassy material | Weight ratio* (times) |
|---|---|---|---|---|---|---|
| 4-a | Metophosphoric acid | $V_2O_5$ | LiOH | 2/1/4.5 | Pyrex | 50 |
| 4-b | Metophosphoric acid | $V_2O_5$ | LiOH | 2/1/4.5 | C glass | 50 |
| 4-c | Metophosphoric acid | $V_2O_5$ | LiOH | 2/1/4.5 | E glass | 50 |
| 4-d | Metophosphoric acid | $V_2O_5$ | LiOH | 2/1/4.5 | Pyrex | 10 |

* Weight ratio of the glassy material based on phosphorus compound + vanadium compound + network modifier.

Example i to iv and Comparative Example i to iv

33

The example shows the corrosion preventive properties of a coating composition in which the corrosion preventive agent of Reference Example i is formulated.

The corrosion preventive agent was added to an aqueous emulsion paint (Nippe Wide from Nippon Paint Co. Ltd.), a melamine alkyd type paint as a thermosetting resin, and an epoxy type paint as a naturally drying resin to form a paint. The paint was applied to a steel panel and naturally dried for 10 days or cured at 140 $^{\circ}$C for 30 minutes. The dried film had a thickness of 50 micrometer. The obtained panel was subjected to a salt spray test according to JIS Z 2371 to evaluate creepage and blister. For comparison, a paint not containing either the phosphate ion source or the vanadate ion source was prepared and tested as mentioned above. The result is shown in Table v.

Table v

| Example | Resin type | Corrosion preventive agent | Salt spray test | |
|---|---|---|---|---|
| | | | Creepage | Blister (500h) |
| i | Emulsion | 1-a | Excellent | Good |
| ii | Melamine alkyd | 1-b | Excellent | Good |
| iii | Epoxy | 1-c | Good | Good |
| iv | Epoxy | 1-d | Excellent | Excellent |
| Standard | Melamine alkyd | − | Normal | Normal |
| Comparative Example | | | | |
| i | Epoxy | Magnesium mono hydrogenphosphate | Normal | Normal |
| ii | Melamine alkyd | Magnesium mono hydrogenphosphate | Normal | Normal |
| iii | Melamine alkyd | 2CaO.V$_2$O$_5$ melt | Normal | Normal |
| iv | Emulsion | 2CaO.V$_2$O$_5$ melt | Bad | Bad |

Creepage of salt spray test

One side creepage from a cut portion

Evaluation is represented as ratio by assigning 1 in the evaluated value to a paint (blank) containing an extender and body pigments.

$$Bad \qquad 1.2 \le ratio$$

$$Normal \qquad 0.7 \le ratio < 1.2$$

$$Good \qquad 0.2 \le ratio < 0.7$$

$$Excellent \qquad ratio < 0.2$$

Blister was visually evaluated by using the coated panel in a salt spray testing machine (500 hours) as follow;

Good - substantially no blisters

Normal - a small number of blisters

Bad - many blisters

Example v to xiii and Comparative Example v and vi

Five parts by weight of a corrosion preventive agent of Reference Example 2 was added to a natural drying epoxy resin paint (Copon Mastic Primer available from Nippon Paint Co. Ltd.) in an amount shown in Table vi. The obtained paint was applied to a steel panel having been sanded by spraying and dried for 10 days to obtain a film having 100 micrometer. The obtained panel was subjected to a blister test.

A temperature gradience was set to 40 $^\circ$C on the coated side and to 20 $^\circ$C on the other side and the coated panel was immersed in a water for 14 days, after which blisters on the coating was visually evaluated.

Excellent - very good in comparison a comparative sample.

Good - superior to the comparative sample.

Normal - equal to the comparative sample.

Bad - inferior to the comparative sample.

The comparative sample was obtained from Comparative Example 5 in which any corrosion preventive pigment was not formulated, but an extender pigment was added.

Table vi

| Example | Corrosion preventive agent | Blister |
|---|---|---|
| v | 2-a | Good |
| vi | 2-b | Good |
| vii | 2-c | Good |
| viii | 2-d | Excellent |
| ix | 2-e | Good |
| x | 2-f | Good |
| xi | 2-g | Normal |
| xii | 2-h | Excellent |
| xiii | 2-i | Excellent |
| Comparative Example v | -- | Normal |
| vi | Strontium chromate | Bad |

Examples xiv to xviii and Comparative Example vii and viii

A paint was prepared by mixing the following ingredients by a sand mill:

| Ingredients | Parts by weight |
|---|---|
| Coal tar pitch varnish | 30 |
| Polyol resin varnish | 12 |
| Extender pigment | 20 |
| The corrosion preventive agent of Reference Example 3 | 2 |
| Sag-resistance agent | 0.5 |
| Methyl isobutyl ketone | 5 |
| Xylole | 20.5 |
| A reaction product of toluidine diisocyanate and polyol (Colonate 55 from Nippon Polyurethane Co. Ltd.) | 10 |

The resultant paint was spray coated on a dull steel panel (JIS G 3141 SPCC SD) and dried for 10 days at ambient temperature to form a film having 200 micrometer. The coated panel was subjected to a salt spray test according to JIS Z 2371 and evaluation was made as in Example i. The result is shown in Table vii

Table vii

| Example | Corrosion preventive agent | Salt spray |
|---|---|---|
| xiv | 3-a | Good |
| xv | 3-b | Excellent |
| xvi | 3-c | Good |
| xvii | 3-d | Good |
| xviii | 3-e | Good |
| Comparative Example vii | – | Bad |
| viii | Strontium chromate | Bad |

Examples xix to xxii and Comparative Example ix

The present example shows a filiform corrosion test.

Five parts by weight of a corrosion preventive agent of Reference Example iv was formulated to a melamine alkyl resin paint and coated on a cold roll steel panel to cure at 140 °C for 30 minutes.

A salt spray test was conducted for 24 hours and allowed to stand for 145 hours at a relative humidity of 85 % at 35 °C and an average length of filiform corrosions was compared with a sample paint containing strontium chromate. In the evaluation, excellent is one more superior to the sample, good is one superior to the sample, normal is one equal to the sample and bad is one inferior to the sample. The result was shown in Table viii.

Table viii

| Example | Corrosion preventive agent | Filiform |
|---|---|---|
| xix | 4-a | Good |
| xx | 4-a | Good |
| xxi | 4-c | Good |
| xxii | 4-d | Excellent |
| Comparative Example ix | – | Bad |

Examples xxiii to xxxii and Comparative Example x

The present example shows that an anionic electrocoating composition was employed.

| Ingredients | Parts by weight |
|---|---|
| Nisseki polybutadien B-1500[1] | 1000 |
| Antigen 6C[2] | 10 |
| Maleic anhydride | 250 |
| Deionized water | 20 |
| Diethylalmine | 0.5 |
| Propylene glycol | 100 |
| Ethyl celosolve | 340 |

[1] Mn 1500, vinyl 65 %, trans 14 %, cis 16 %; commercially available from Nippon Petrorium Company.

[2] N-methyl-N'-(1,3-dimethylbutyl)-p-phenylenediamine, available from Sumitomo Chemical Industries Inc.

A two liter flask having a condenser was charged with 1000 parts by weight of Nisseki polybutadiene B-1500, 10 parts by weight of Antigen and 25 parts by weight of maleic anhydride and reacted at 190 to 200 °C under mixing. After 5 hours, a termination of the reaction was confirmed by a dimethylaniline coloring reaction. After cooling to 100 °C, a mixture of 20 parts by weight of deionized water and 0.5 parts by weight of diethylamine was added dropwise for about 30 minutes. After finishing the addition, mixing was continued for about one hour to obtain an acid value of 140. Then, 100 parts by weight of propylene glycol was added and reacted at 110 °C for 3 hours to obtain an acid value of 125. After adding 340 parts by weight of ethyl celosolve, a reaction was continued for about one hour to obtain a resin having a solid content of 80 %.

Preparation of a pigment paste

A mixture was prepared by mixing 125 g of maleic acid modified polybutadiene obtained above with 13 g of triethylamine and 250 g of deionized water was slowly added to form a varnish of non-volatile of about 26%. The corrosion preventive agent and the other pigment was added to the varnish and mixed for about one hour by a disper. The resultant mixture was ground and 112 g of deionized water was added to obtain a pigment paste.

Preparation of an electrocoating composition

| Ingredients | Parts by weight (g) |
|---|---|
| Maleic acid modified polybutadien resin | 125 |
| Triethylamine | 14 |
| Newcall 710 F [3] | 1 |

EP 0 259 748 B1

Cobalt naphthenate                        1.5

Deionized water                           358.5

Pigment paste obtained above             100

² Nonionic surfactant of Nippon Surfactant Company.


The components mentioned above excepting the pigment paste were emulsified and the pigment paste was added to form an anionic electrocoating composition.

The obtained electrocoating composition was electrocoated onto two cold rolled steel panels (JIS G 3141 SPCC-SD) available from Nippon Test Panel Company, which were apart 1 cm from each other. The coating condition was set at 28 ± 0.5 °C and a voltage sufficient to form 30 to 35 micrometer film on a zinc phosphate treated steel panel (the steel panel treated with Granodine SD-5000 available from Nippon Paint Co. Ltd.). The coated panel was cured at 170 °C for 25 Minutes and the film thickness was measured at inside and outside of the panel. The result is shown in Table 9. As is apparent from Table 9, the coating composition had enhanced throwing power.

## Table 9

| Example | Corrosion pre-ventive agent | Thickness of film | |
|---|---|---|---|
| | | Outside | Inside |
| xxiii | 1-e | 26 | 18 |
| xxiv | 1-f | 27 | 15 |
| xxv | 1-g | 33 | 30 |
| xxvi | 1-h | 34 | 32 |
| xxvii | 1-i | 31 | 26 |
| xxviii | 1-j | 20 | 14 |
| xxiv | 1-k | 28 | 24 |
| xxx | 1-1 | 30 | 20 |
| xxxi | 2-f | 30 | 16 |
| xxxii | 4-a | 34 | 33 |
| Comparat-ive Exam-ple x | Strontium chromate | 35 | 35 |


Examples xxxiii to xxxvi and Comparative Examples xi

The corrosion preventive agent of Reference Examples was formulated into an aqueous paint containing an aluminum flake pigment having a length of about 25 micrometer and a thickness of about 0.8 micrometer in an amount of 0.5 parts by weight to form a paint. The obtained paint was allowed to stand at 50 °C and hydrogent gas generating from the paint was collected in a flask. An amount of gas was measured based on 50 g of the paint. The result is shown in Table x.

The aqueous paint was prepared as follow:

(Preparation of polyester resin)

A two liter flask equipped with a stirrer, a nitrogen-introducing tube, a temperature controlling apparatus, a condenser and a decanter was charged with 130 parts by weight of bishydroxyethyl taurine, 134 parts by weight of neopentyl glycol, 236 parts by weight of azelaic acid, 186 parts by weight of phthalic anhydride, and 27 parts by weight of xylene, and heated to start a reaction. Water produced by the reaction was azeotropically distilled together with xylene.

The mixture was heated to 190 °C over about 2 hours after commencing reflux and continued to mix and distill until an acid value corresponding to carboxylic acid was 145. The mixture was then cooled to 140 °C and 314 parts by weight of Cardura E 10 (glycidyl ester of versatic acid available from Shell Chemical Company) was added for 30 minutes while maintaining 140 °C. Mixing was continued for 2 hours to terminate the reaction. The obtained polyester resin had an acid value of 59, a hydroxyl value of 90 and Mn 1054.

(Preparation of resin particles)

A one liter reaction vessel equipped with a stirrer, a condenser and a temperature controlling apparatus was charged with 282 parts by weight of deionized water, 10 parts by weight of the polyester resin obtained above and 0.75 parts by weight of dimethylethanolamine to form a mixture. a solution containing 4.5 parts by weight of azobiscyanovaleric acid, 45 parts by weight of deionized water and 4.3 parts by weight of dimethylethanolamine was added to the mixture, to which a solution containing 70.7 parts by weight of methyl methacrylate, 94.2 parts by weight of n-butyl acrylate, 70.7 parts by weight of styrene, 30 parts by weight of 2-hydroxyethyl acrylate and 4.5 parts by weight of ethylene glycol dimethyl acrylate was added dropwise for 60 minute. After addition, a solution containing 1.5 parts by weight of azobiscyanovaleric acid, 15 parts by weight of deionized water and 1.4 parts by weight of dimethylethanolamine was added and mixed at 80 °C for 60 minutes to obtain an emulsion having non-volatile 45 %, pH 7.2, viscosity 92 cps (25 °C) and a particle size of 0.165 micron. The emulsion was spray-dried to obtain resin particles having a particle size of 0.3 micron. 100 parts by weight of the particles were dispersed in 200 parts by weight of xylene to obtain a xylene dispersion.

(Preparation of a resin for metallic coating composition)

A reaction vessel equipped with a stirrer, a temperature controlling apparatus and a condenser was charged with 76 parts by weight of ethylene glycol monobutyl ether and 61 parts by weight of a monomer solution (containing 45 parts by weight of styrene, 63 parts by weight of methyl methacrylate, 48 parts by weight 2-hydroxyethyl methacrylate, 117 parts by weight of n-butyl acrylate, 27 parts by weight of methacrylic acid, 3 parts by weight of laurylmercaptane and 3 parts by weight of azobisisbutylonitrile) at 120 °C and mixed for one hour. 28 parts by weight of dimethylethanolamine and 200 parts by weight of deionized water was added to the resultant mixture to obtain an acrylic varnish having non-volatile 50 % and Mn 6,000. The resin had a OH value of 70, and an acid value of 58.

(Preparation of metallic coating composition)

A mixture of 140 parts by weight of the resin varnish mentioned above, 30 parts by weight of the resin dispersion, 10 parts by weight of aluminum pigment and 30 parts by weight of Cymel 303 as a cross-linking agent was diluted with deionized water up to 25 to 30 seconds of No.4 Ford Cup (20 °C) to form a metallic coating composition.

(Preparation of clear coating composition)

A polymer was prepared as generally described in the above (Preparation of a resin for metallic coating composition), using 65.8 parts by weight of n-butyl acrylate, 11.8 parts by weight of methyl methacrylate, 16.2 parts by weight of hydroxyethyl methacrylate, 6.1 parts by weight of methacrylic acid and 5 parts by weight of azobisisobutylonitrile. The polymer was neutralized with dimethylethanolamine and then diluted with water to obtain a resin varnish having non-volatile 50 %.

To the obtained resin varnish, a cross-linking agent (hexamethoxymethylolmelamine available from Mitsui Toatsu Company as "Cymel 303" was added in a solid/resin ratio of 70/30 and diluted up to 30 to 35 seconds (20 °C) of No.4 Ford Cup to obtain an aqueous clear coating composition.

(Coating test)

The metallic coating composition was spray-applied to an intermediate coated steel panel in a thickness of 20 micron at 23 °C and 60 % relative humidity, on which the clear coating composition was spray-applied in a thickness of 30 micron in a same condition mentioned above. The former was coated in two stages at an interval of one minute and then it was dried at 80 °C for 5 minutes. The latter was then coated in one stage and allowed to a setting of 7 minutes. The coated panel was cured at 150 °C for 20 minutes to obtain a sample panel.

Table x

| Example | Corrosion preventive agent | Amount of hydrogen gas (cc) | Brightness |
|---|---|---|---|
| xxxiii | 1-a | 3 | Good |
| xxxiv | 1-d | 4 | Good |
| xxxv | 2-d | 2 | Good |
| xxxvi | 3-d | 4 | Good |
| Comparative Example xi | None | 10 | Normal |

A zinc rich paint was prepared from the following ingredients:

### Paint charge

| Ingredients | Parts by weight |
|---|---|
| Ethyl Silicate 28 (Colcoat Co. Ltd.) | 52.1 |
| Isopropanol | 38.9 |
| Water | 8.6 |
| 0.1 M hydrochloric acid | 0.4 |

### Pigment charge

| | |
|---|---|
| Zinc powder (CS series from Mitsui Mining & Smelting Co., Ltd.) | 70.4 |
| Corrosion preventive agent of Reference Example 1-a | 3.2 |
| Clay (ASP 200 from Engelhard Minerals and Chemicals Corporation) | 17.7 |

The paint charge excepting water and hydrochloric acid was mixed and heated to 40 °C in a reaction vessel and water and hydrochloric acid were added for one hour. After adding them, mixing was continued for another one hour to form a paint . The pigment charge was mixed with the paint to form a zinc rich paint.

The obtained zinc rich paint was spray-coated on a steel panel sand-blasted and dried for 7 days to form a film having 15 ± 2 micrometer. The coated panel was subjected to a salt spray test and a top-coat comparative test.

(1) Salt spray test

The test was carried out for 240 hours according to JIS Z 2371. Red rust was evaluated according to ASTM (D 610). White rust was very few.

(2) Top Coat adhesive test

A paint (LZ Primer available from Nippon Paint Co. Ltd.) was coated twice and allowed to stand outside for 6 months. The obtained panel was subjected to a cross cut test and a creepage from 5 mm cut was evaluated according to JIS K 5400. Adhesive was very good.

For comparison, a zinc rich paint not containing the corrosion preventive agent was prepared and subjected to a same test. White rust and adhesive were not good.

**Claims**

1. A corrosion preventive pigment consisting essentially of
   (a) a phosphorus compound which generates phosphate ions in the presence of water and oxygen, selected from the group consisting of phosphorous pentoxide, ortho-phosphoric acid, a condensed phosphoric acid, an alkaline earth metal or transition metal phosphate, and an alkaline earth metal or transition metal condensed phosphate, and
   (b) a vanadium compound which generates vanadate ions in the presence of water and oxygen, selected from the group consisting of vanadium (V) oxide, a vanadyl compound, an alkaline earth metal or transition metal vanadate, a baked condensate of alkaline earth metal or transition metal vanadates, and a heterocondensate of alkaline earth metal or transition metal vanadate;
   and which has a weight ratio of (a) / (b) of 0.3 to 100 in terms of $P_2O_5/V_2O_5$ and has a pH value of from 5 to 9.

2. The pigment according to claim 1 which is prepared by calcining the mixture of the phosphorus compound and the vanadium compound.

3. The pigment according to Claim 2 wherein the calcination is carried out at a temperature of at least 600 °C.

4. The pigment according to Claim 2 wherein said mixture further comprises at least one network modifier (c), selected from the group consisting of metal oxide, metal hydroxide, metal carbonate, metal nitrate, metal organic acid salt, metal silicate and metal borate.

5. The pigment according to Claim 4 wherein said metal excludes alkali metal.

6. The pigment according to Claim 4 wherein said network modifier is a manganese oxide (MnOx :x is 1.5 < x ≦ 2.0) or a combination of the manganese oxide and other network modifiers.

7. The pigment according to Claim 6 wherein said manganese oxide is present in an amount of not less than 0.1 mole based on one mole of the vanadium compound (b) which is calculated in terms of $V_2O_5$.

8. The pigment according to Claim 4 wherein said network modifier (c) is present in such an amount that a mole number of the metal cations (M) in the pigment is not more than three times the total mole number of $V_2O_5$ and $P_2O_5$ when the metal cations are expressed in the form of MO, $M_2O_3$, $M_3O_4$, $MO_2$ or $M_2O$.

9. The pigment according to Claim 1 or 4 further comprising a glassy material (d).

10. The pigment according to Claim 9 wherein said glassy material is silicate glass.

11. The pigment according to Claim 9 wherein said glassy material is present in an amount of 5 to 500 times the total amount of the phosphorus compound (a), the vanadium compound (b) and optionally the network modifier (c).

12. The pigment according to Claim 1 which is prepared by mixing the phosphorus compound and the vanadium compound.

13. The pigment according to Claim 12 wherein said mixture further comprises at least one network modifier (c), selected from the group consisting of metal oxide, metal hydroxide, metal carbonate, metal nitrate, metal organic acid salt, metal silicate and metal borate.

14. The pigment according to Claim 13 wherein said metal excludes alkali metal.

15. A corrosion preventive coating composition comprising the pigment of any preceding claim and a film-forming resin.

16. The composition according to Claim 15 being an aqueous coating composition, an anionic electrocoating composition or a zinc rich coating composition.

**Revendications**

1. Un pigment inhibiteur de la corrosion constitué essentiellement de :
   (a) un composé du phosphore qui génère des ions phosphate en présence de l'eau et de l'oxygène, choisi dans le groupe comprenant le pentoxyde de phosphore, l'acide orthophosphorique, un acide phosphorique condensé, un phosphate de métal alcalino-terreux ou de métal de transition, et un phosphate condensé de métal alcalino-terreux ou de métal de transition, et
   (b) un composé du vanadium qui génère des ions vanadate en présence de l'eau et de l'oxygène, choisi dans le groupe comprenant l'oxyde de vanadium (V), un composé de vanadyle, un vanadate de métal alcalino-terreux ou de métal de transition, un condensat cuit de vanadates de métal alcalino-terreux ou de métal de transition, et un hétérocondensat de vanadate de métal alcalino-terreux ou de métal de transition ;
   et qui a un rapport pondéral (a)/(b) de 0,3 à 100 en termes de $P_2O_5/V_2O_5$ et qui a une valeur de pH de 5 à 9.

2. Le pigment selon la revendication 1 qui est préparé par calcination du mélange de composé du phosphore et de composé du vanadium.

3. Le pigment selon la revendication 2, selon lequel la calcination est conduite à une température d'au moins 600° C.

4. Le pigment selon la revendication 2, selon lequel ledit mélange comprend en outre au moins un agent modificateur de réseau (c), choisi dans le groupe comprenant les suivants : oxyde métallique, hydroxyde métallique, carbonate métallique, nitrate métallique, sel métallique d'acide organique, silicate métallique et borate métallique.

5. Le pigment selon la revendication 4, selon lequel ledit métal exclut les métaux alcalins.

6. Le pigment selon la revendication 4, selon lequel ledit agent modificateur de réseau est un oxyde de manganèse (MnOx : x est $1,5 < x \leq 2,0$) ou une combinaison de l'oxyde de manganèse avec d'autres agents modificateurs de réseau.

7. Le pigment selon la revendication 6, selon lequel ledit oxyde de manganèse est présent en quantité non inférieure à 0,1 mole par mole de composé du vanadium (b) qui est calculé en termes de $V_2O_5$.

43

8. Le pigment selon la revendication 4, selon lequel ledit agent modificateur de réseau (c) est présent en quantité telle que le nombre de moles des cations métalliques (M) dans le pigment ne dépasse pas trois fois le nombre total de moles de $V_2O_5$. et de $P_2O_5$ lorsque les cations métalliques sont exprimés sous la forme de MO, $M_2O_3$, $M_3O_4$, $MO_2$ ou $M_2O$.

9. Le pigment selon la revendication 1 ou 4 comprenant en outre un matériau vitreux (d).

10. Le pigment selon la revendication 9, selon lequel ledit matériau vitreux est du verre de silicate.

11. Le pigment selon la revendication 9, selon lequel ledit matériau vitreux est présent en quantité de 5 à 500 fois la quantité totale du composé du phosphore (a), du composé du vanadium (b) et éventuellement de l'agent modificateur de réseau (c).

12. Le pigment selon la revendication 1 qui est préparé par mélangeage du composé du phosphore et du composé du vanadium.

13. Le pigment selon la revendication 12, selon lequel ledit mélange comprend en outre au moins un agent modificateur de réseau (c), choisi dans le groupe comprenant les suivants : oxyde métallique, hydroxyde métallique, carbonate métallique, nitrate métallique, sel métallique d'acide organique, silicate métallique et borate métallique.

14. Le pigment selon la revendication 13, selon lequel ledit métal exclut les métaux alcalins.

15. Une composition de revêtement inhibitrice de la corrosion comprenant le pigment selon l'une quelconque des revendications précédentes et une résine filmogène.

16. La composition selon la revendication 15, sous la forme d'une composition aqueuse de revêtement, d'une composition de revêtement électrolytique anionique ou d'une composition de revêtement riche en zinc.

**Ansprüche**

1. Korrosionsverhinderndes Pigment, im wesentlichen bestehend aus
   (a) einer Phosphorverbindung, die Phosphationen in der Gegenwart von Wasser und Sauerstoff erzeugt, ausgewählt aus der Gruppe, bestehend aus Phosphorpentoxid, Ortho-Phosphorsäure, einer kondensierten Phosphorsäure, einem Phosphat aus einem Erdalkalimetall oder einem Übergangsmetall und einem kondensierten Phosphat aus einem Erdalkalimetall oder einem Übergangsmetall; und
   (b) einer Vanadiumverbindung, die in der Gegenwart von Wasser und Sauerstoff Vanadationen erzeugt, ausgewählt aus der Gruppe, die aus Vanadium-(V)-Oxid, einer Vanadylverbindung, einem Vanadat aus einem Erdalkalimetall oder einem Übergangsmetall, einem gebrannten Kondensat aus Erdalkalimetall- oder Übergangsmetallvanadaten und aus einem Heterokondensat von Erdalkalimetall- oder Übergangsmetallvanadaten besteht;
   und welches ein Gewichtsverhältnis von (a) / (b) von 0,3 bis 100, ausgedrückt in $P_2O_5/V_2O_5$ aufweist und welches einen pH-Wert von 5 bis 9 aufweist.

2. Pigment nach Anspruch 1,
   dadurch **gekennzeichnet, daß**
   es durch Kalzinieren der Mischung der Phosphorverbindung und der Vanadiumverbindung hergestellt ist.

3. Pigment nach Anspruch 2,
   dadurch **gekennzeichnet, daß**
   die Kalzinierung bei einer Temperatur von wenigstens 600°C durchgeführt ist.

4. Pigment nach Anspruch 2,
   dadurch **gekennzeichnet, daß**
   die Mischung weiterhin zumindest einen Vernetzungsmodifikator (c) umfaßt, ausgewählt aus der Gruppe, bestehend aus Metalloxid, Metallhydroxid, Metallcarbonat, Metallnitrat, Metallsalz einer organischen Säure, Metallsilikat und Metallborat.

5. Pigment nach Anspruch 4,
dadurch **gekennzeichnet**, daß
das Metall Alkalimetall ausschließt.

6. Pigment nach Anspruch 4,
dadurch **gekennzeichnet**, daß
der Vernetzungsmodifikator ein Manganoxid ($MnO_x$, worin X bedeutet: $1,5 < x \leq 2,0$) oder eine Kombination aus dem Manganoxid und anderen Vernetzungsmodifikatoren ist.

7. Pigment nach Anspruch 6,
dadurch **gekennzeichnet**, daß
das Manganoxid in einer Menge von nicht weniger als 0,1 Mol, bezogen auf 1 Mol der Vanadiumverbindung (b), die in Form von $V_2O_5$ berechnet wird, vorhanden ist.

8. Pigment nach Anspruch 4,
dadurch **gekennzeichnet**, daß
der Vernetzungsmodifikator (c) in einer solchen Menge vorhanden ist, daß eine Molanzahl der Metallkationen (M) in dem Pigment nicht mehr als die dreifache Menge der gesamten Molanzahl von $V_2O_5$ und $P_2O_5$ ausmacht, wenn die Metallkationen in Form von MO, $M_2O_3$, $M_3O_4$, $MO_2$ oder $M_2O$ ausgedrückt sind.

9. Pigment nach Anspruch 1 oder 4,
dadurch **gekennzeichnet**, daß
es weiterhin ein Glasmaterial (d) enthält.

10. Pigment nach Anspruch 9,
dadurch **gekennzeichnet**, daß
das Glasmaterial Silikatglas ist.

11. Pigment nach Anspruch 9,
dadurch **gekennzeichnet**, daß
das Glasmaterial in einer 5 bis 500fachen Menge der Gesamtmenge der Phosphorverbindung (a), der Vanadiumverbindung (b) und wahlweise des Vernetzungsmodifikators (c) vorhanden ist.

12. Pigment nach Anspruch 1,
dadurch **gekennzeichnet**, daß
es durch Mischen der Phosphorverbindung und der Vanadiumverbindung hergestellt ist.

13. Pigment nach Anspruch 12,
dadurch **gekennzeichnet**, daß
die Mischung weiterhin zumindest einen Vernetzungsmodifikator (c) umfaßt, ausgewählt aus der Gruppe, die aus Metalloxid, Metallhydroxid, Metallcarbonat, Metallnitrat, einem Metallsalz einer organischen Säure, Metallsilikat und Metallborat besteht.

14. Pigment nach Anspruch 13,
dadurch **gekennzeichnet**, daß
das Metall Alkalimetall ausschließt.

15. Korrosionsverhindernde Beschichtungszusammensetzung, umfassend das Pigment nach einem der vorhergehenden Ansprüche und ein filmbildendes Harz.

16. Zusammensetzung nach Anspruch 15,
dadurch **gekennzeichnet**, daß
sie eine wässrige Beschichtungszusammensetzung, eine anionische Elektrobeschichtungszusammensetzung oder eine zinkreiche Beschichtungszusammensetzung ist.

Fig. 1

Fig. 2

Fig. 3

Fig. 4

Fig. 5

Fig. 6

Fig. 7

Phosphate ion system

Phosphate ion + vanadate ion

Oxygen permeable rate of film    (ml· cm /cm²· sec · cm Hg)

52